# EUROPÄISCHE PATENTSCHRIFT

(11) **EP 1 904 587 B1**
(45) Veröffentlichungstag und Bekanntmachung des Hinweises auf die Patenterteilung: **03.11.2010**
(21) Anmeldenummer: 07711644.0
(22) Anmeldetag: 23.02.2007
(51) Int. Cl.: C09C 1/00, C08K 9/02, C09D 5/36

(54) **WETTERSTABILE PERLGLANZPIGMENTE MIT NACHBESCHICHTUNG ENTHALTEND -SILANE UND VERFAHREN ZU DEREN HERSTELLUNG**
PEARLESCENT PIGMENTS HAVING A SECONDARY COATING COMPRISING -SILANES AND METHOD FOR THE PRODUCTION THEREOF
PIGMENTS À LUSTRE NACRÉ COMPORTANT UN POST-REVÊTEMENT CONTENANT DES -SILANES ET PROCÉDÉ DE FABRICATION

(30) Priorität: 24.02.2006 DE 102006009129
(43) Veröffentlichungstag der Anmeldung: 02.04.2008
(73) Patentinhaber: Eckart GmbH, 91235 Hartenstein (DE)
(72) Erfinder: KAUPP, Günter, 91284 Neuhaus (DE); SCHMIDT, Ulrich, 91217 Hersbruck (DE)
(74) Vertreter: Walcher, Armin
(86) Internationale Anmeldenummer: PCT/EP2007/001573
(87) Internationale Veröffentlichungsnummer: WO 2007/098887

(56) Entgegenhaltungen:
- EP-A- 1 203 795
- EP-A1- 0 141 174
- EP-A1- 0 632 109
- WO-A-2004/092284
- WO-A-2004/104109
- WO-A-2005/075579
- WO-A-2006/021386

## Beschreibung

Perlglanzpigmente, die Titandioxid in der Deckschicht enthalten bzw. die aus partikelförmigem TiO₂ aufgebaut sind, besitzen eine gewisse photokatalytische Aktivität. Wirkt nun UV-Licht in Gegenwart von Wasser und Sauerstoff auf ein Perlglanzpigment ein, so kann die UV-Aktivität des Periglanzpigments einen beschleunigten Abbau von organischen Verbindungen, z. B. einer Bindemittelmatrix, auslösen. Bereits der im Tageslicht enthaltene UV-Anteil kann diese Reaktion bedingen, D.h., für Applikationen wie Automobillackierungen, die der Witterung direkt ausgesetzt sind, müssen besonders stabilisierte Perlglanzpigmente eingesetzt werden. Um diesem für die Außenanwendung nachteiligen photokatalytischen Effekt entgegenzuwirken, können Perlglanzpigmente zur Verminderung der Photoaktivität mit verschiedenen Schutzbeschichtungen ausgestattet werden. Diese Schutzbeschichtungen enthalten häufig Oxide der Elemente Cer und/oder Zirkonium, die sich als besonders effektiv herausgestellt haben.

Um derart stabilisierte Perlglanzpigmente kompatibel zum jeweiligen Bindemittel der Anwendung, insbesondere in Wasserlacken, zu machen, werden diese mit einer organischen Nachbeschichtung versehen. Diese bindet einerseits auf die Oberfläche der Perlglanzpigmente und andererseits an das Bindemittel. Hierdurch werden gute Schwitzwasserbeständigkeit und gute rheologische Eigenschaften, beispielsweise eine gute Dispergierbarkeit, im Lack erhalten. Zudem können durch die organische Nachbeschichtung das Orientierungsverhalten der Penglanzpigmente im Applikationsmedium und damit auch die optischen Eigenschaften günstig beeinflusst werden.

In der EP 0 141 174 werden Perlglanzpigmente mit verbesserter Witterungsbeständigkeit beschrieben, die eine Schutzbeschichtung aufweisen, die im Wsentlichen aus einer Seltenerdmetallverbindung - z.B. Cer - und einem Polysiloxan besteht. Außerdem können in der Schutzbeschichtung Zink- bzw. Aluminiumsalze oder auch Silikat enthalten sein. Die Beschichtung selbst erfolgt in wässriger Suspension und das Produkt wird nach der Isolierung getrocknet.

Die EP 0 342 533 offenbart mit Zirkoniumoxid belegte Pigmente, auf die eine aus einem hydratisierten Metalloxid der Elemente Kobalt, Mangan oder Cer bestehende Schicht aufgebracht werden kann. Das so behandelte Pigment soll jetzt zwar in nichtwässrigen Lacksystemen gut einsetzbar sein, für wasserverdünnbare Lacke ist es aber gemäß der EP 0 632109 nach wie vor ungeeignet, da hier die Bildung von mikrofeinen Bläschen im Lackfilm verursacht wird.

Gemäß der Lehre der EP 0 632 109 wird eine dreischichtige Schutzschicht auf ein mit Metalloxiden belegtes plättchenförmiges Substrat aufgebracht. In einer 1. Stufe wird SiO₂, in einer 2. Stufe wird ein Hydroxid oder Oxid-Hydrat von Cer, Aluminium oder Zirkonium und in einer 3. Stufe werden mindestens ein Hydroxid oder Oxid-Hydrat von Cer, Aluminium oder Zirkonium sowie ein organisches Kupplungsreagenz aufgebracht. Darüber hinaus müssen die Kupplungsreagenzien vor der Bindung an die Pigmentoberfläche hydrolysiert werden, wobei gemäß der Lehre der WO 98/13426 nur maximal 60 % der zugesetzten Kupplungsreagenzien an die Pigmentoberfläche gebunden werden können.

Die WO 98/13426 offenbart modifizierte Perlglanzpigmente auf der Basis eines mit Metalloxiden beschichteten, plättchenförmigen Substrates. Gemäß der Lehre der WO 98/13426 besteht die Deckschicht aus mindestens zwei Oxiden, gemischten Oxiden oder Mischoxiden von Siliziumdioxid, Aluminiumoxid, Ceroxid, Titanoxid oder Zirkoniumoxid und einem wasserbasierenden oligomeren Silansystem. Das wasserbasierende oligomere Silansystem wird durch Alkylreste, die bis maximal acht C-Atome enthalten, teilweise hydrophobiert. Dennoch ist der überwiegende Anteil der Nachbeschichtung hydrophiler Natur. Die Pigmente besitzen entgegenlautend der Offenbarung noch ein gewisses Quellverhalten im Schwitzwassertest.

Weiterhin sind keine Untersuchungen zum Einfluss der Reihenfolge der oxidischen Schutzschichten hinsichtlich ihrer Wirksamkeit auf die UV-Stabilität des Perlglanzpigmentes offenbart. Daher ist auch kein optimaler Schutzschichtaufbau beschrieben.

Gegenstand der EP 0 649 886 sind Perlglanzpigmente mit Titandioxid- oder Eisenoxidbeschichtung, die in wässriger Phase mit einer Kombination aus Cer- und Aluminiumoxidhydraten nachbeschichtet und anschließend getrocknet werden.

Gemäß der Lehre der EP 1 203 795 kann ein Perlglanzpigment einen Schichtaufbau, der in einer ersten Schicht Oxidhydrate des Siliziums oder Aluminiums enthält und in einer nachfolgenden zweiten Schicht Oxidhydrate des Siliziums, Aluminiums, Zirkoniums oder Cers enthält, umfassen, wobei die Zusammensetzung der 1. Schicht von der der 2. Schicht verschieden ist. Das Perlglanzpigment weist ferner eine dritte Schicht aus mindestens einem organischen hydrophoben Kupplungsreagenz auf, wobei das organische hydrophobe Kupplungsreagenz nicht mit dem Bindemittel beispielsweise eines Lacksystems reagiert. Entgegen der Offenbarung dieser Schrift weisen die Pigmente keine gute Adhäsion im Schwitzwassertest auf, da die hydrophobe Kupplungsreagenzien nicht über geeignete Gruppen zur Anbindung an das Lacksystem aufweisen.

Bei den meisten der im Stand der Technik verwendeten Verfahren wird SiO₂ und/oder Aluminiumoxid als erste Schicht aufgebracht. Eine Ceroxidschicht wird meist im Anschluss daran oder als Mischoxidfällung zusammen mit weiteren Komponenten aufgebracht. Die Anbindung der Silane erfolgt dann in der Regel in einer Mischfällung mit der Fällung der Metallhydroxide in wässriger Lösung. Aufgrund der Mischfällung der Hydroxide und des Silansystems ist die Effektivität der Oberflächenbelegung mit dem oligomeren Silansystem gering. Folglich werden unverhältnismäßig große Mengen der teuren Silane eingesetzt, was die Rohstoffkosten unnötig erhöht.

In der EP 1 084 198 B1 sind Effektpigmente beschrieben, die aufgrund ihrer Oberflächenmodifizierung mit reaktiven Orientierungsmitteln, sehr gute Haftfestigkeiten zum Basislack aufweisen. Die EP 1 084 198 B1 offenbart vor diesem Hintergrund jedoch keine wetterstabilen Perlglanzpigmente.

In der DE 103 19 937 A1 sind organofunktionelle oberflächenbeschichtete Metalloxide beschrieben. Die Metalloxide werden mit α-Silanen oberflächenmodifiziert. Es sind jedoch in keiner Weise Perlglanzpigmente und die damit verbundenen Anforderungen erwähnt.

Aus der WO 2004/104109 A2 sind Effektpigmente, welche zur Erhöhung der Wetterstabilität eine Kohlenstoff enthaltende organische Beschichtung, die kohlenstoffhaltige ionische Spezies enthält, sowie auf der Kohlenstoff-Beschichtung ein Silankopplungsmittel aufweist, bekannt.

Aus der WO 2004/092284 A1 sind oberflächenmodifizierte Effektpigmente auf Basis eines plättchenförmigen Substrats, welches mit wenigstens einer calcinierten Oxidschicht allein oder in Mischung mit Sulfaten, Phosphaten und/ oder Boraten sowie einer organischen Beschichtung belegt ist, bekannt.

Die WO 2006/021368 A1 offenbart Perlglanzpigmente, basierend auf einem metalloxidhaltigen plättchenförmigen Substrat, welches mit einer ersten Schutzschicht aus Ceroxid und/oder Cerhydroxid und einer zweiten Schutzschicht aus Siliziumdioxid belegt ist.

Aus der WO 2005/075579 A1 sind mit Siliziumdioxid umhüllte Metalloxidpartikel bekannt.

Aufgabe der Erfindung ist es, Metalloxid-haltige Perlglanzpigmente mit einem einfach aufgebauten Schichtaufbau und einer gegenüber dem Stand der Technik generell verbesserten Wetterstabilität bereit zu stellen. Der schützende Schichtaufbau soll insbesondere einen wirksamen Schutz gegenüber einer durch UV-Licht induzierten photokatalytischen Aktivität des Pigmentes geben, ohne die optischen Eigenschaften des Pigmentes wie Glanz wesentlich zu beeinträchtigen. Zudem ist erwünscht, daß die Metalloxid-haltigen Perlglanzeffektpigmente gute anwendungstechnische Eigenschaften insbesondere im Schwitzwassertest aufweisen.

Die Wirkungsweise dieses schützenden Schichtaufbaus soll gegenüber dem Stand der Technik verbessert sein. Weiterhin sollen die erfindungsgemäßen Perlglanzpigmente mit einer organisch-chemischen Nachbeschichtung versehen werden, die sehr gutes Orientierungsverhalten der Perlglanzpigmente im Lack bei gleichzeitiger hervorragender Anbindung an das Bindemittel (sehr gute Haftfestigkeit) ermöglicht. Die Pigmente sollen einen verbesserten Schwitzwassertest aufweisen und hier insbesondere Verbesserungen hinsichtlich der Kriterien Adhäsion, Quellung, Blasengrad und DOI im Basislack-Klarlacksystem.

Die Aufgabe wird gelöst durch Bereitstellung eines Perlglanzpigmentes mit Metalloxid-haltigem, plättchenförmigen Substrat und mit einer ersten und einer zweiten Schutzschicht, wobei das Metalloxid einen Brechungsindex von größer als 1,8 hat, wobei
a) die erste Schutzschicht Ceroxid und/oder Ceroxid-Hydrat und/oder Cerhydroxid umfaßt,
b) die zweite Schutzschicht im Wesenttichen, vorzugsweise vollständig, aus SiO₂ besteht,
   wobei die zweite Schutzschicht nach der ersten Schutzschicht angeordnet ist und zwischen der ersten und der zweiten Schutzschicht Metalloxidschichten, die verschieden von Ceroxid und/oder Ceroxid-Hydrat und/oder Cerhydroxid und SiO₂ sind, angeordnet sein können, wobei
c) die zweite Schutzschicht eine organisch-chemische Nachbeschichtung aufweist und die organisch-chemische Nachbeschichtung wenigstens ein über wenigstens ein Sauerstoffatom an der zweiten Schutzschicht gebundenes α-Silan mit der Formel

   -O₍₄₋ₙ₋ₘ₎-Si(-R¹)ₘ(-CH₂-Y)ₙ (I)

   umfasst, wobei 1 ≤ n+m ≤ 3; m = 0 - 2; n = 1 - 3 ist und
   R¹ ein Wasserstoffatom oder ein Si-C gebundener C₁-C₂₀-Kohlenwasserstoffrest oder ein C₁-C₁₅-Kohlenwasserstoffoxyrest, in den jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=, -N=N-, oder -P= ersetzt sein können, wobei R¹ unabhängig voneinander gleich oder verschieden sein kann,
   R^{x} ein Wasserstoffatom oder linearer, verzweigter und/oder cyclischer C₁-C₁₅-Kohlenwasserstoff oder Arylrest sein kann, und
   Y eine mit einem Bindemittelsystem reaktive funktionelle Bindungsgruppe ist, wobei die organisch-chemische Nachbreschichtung Kein silan ohne funktionene Bindungsgruppen aufweist.

Die Aufgabe wird weiterhin gelöst durch ein Verfahren zur Herstellung eines Perlglanzpigmentes nach einem der Ansprüche 1 bis 23, das die folgenden Schritte umfasst:
(a) Suspendieren von Metalioxid-haltigem, plättchenförmigen Substrat in einer Flüssigphase, wobei das Metalloxid einen Brechungsindex von größer als 1,8 hat,
(b) Aufbringen einer Schicht mit Ceroxid und/oder Ceroxid-Hydrat und/oder Cerhydroxid auf das plättchenförmige Substrat,
(c) optionales Aufbringen einer oder mehrerer Metalloxidschichten auf das in Schritt (b) beschichtete Pigment,
(d) Aufbringen einer im Wesentlichen, vorzugsweise vollständig, aus SiO₂-bestehenden Schicht auf das in Schritt (b) oder Schritt (c) beschichtete Pigment,
(e) Beschichten der Pigmentes nach Schritt d) mit einer organisch-chemischen Nachbeschichtung umfassend wenigstens ein α-Silan mit der Formel

   X₍₄₋ₙ₋ₘ)Si(-R¹)ₘ(-CH₂-Y)ₙ, (II)

   wobei 1 ≤ n+m ≤ 3; m = 0 - 2; n =1- 3 ist und
   R¹ ein Wasserstoffatom oder ein Si-C gebundener C₁-C₂₀-Kohlenwasserstoffrest oder ein C₁-C₁₅-Kohlenwasserstoffoxyrest, in den jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N=, -N=N-, oder -P=ersetzt sein können, wobei R¹ unabhängig voneinander gleich oder verschieden sein kann,
   R^{x} ein Wasserstoffatom oder linearer, verzweigter und/oder cyclischer C₁-C₁₅-Kohlenwasserstoff oder Arylrest, wobei R^{x} gleich oder verschieden sein kann und
   X eine hydrolysier- und kondensationsfähige Gruppe ist, die aus der Gruppe, die aus Alkoxy, Hydroxy, Acetyloxy, Halogen und Mischungen davon besteht, ausgewählt wird und
   Y eine mit einem Bindemittelsystem reaktive funktionelle Bindungsgruppe ist.

Bevorzugte Weiterbildungen des erfindungsgemäßen Effektpigmentes und des erfindungsgemäßen Verfahrens sind jeweils in den Unteransprüchen angegeben.

Erfindungsgemäß besteht die zweite Schutzschicht im Wesentlichen aus SiO₂, Vorzugsweise besteht die zweite Schutzschicht vollständig aus SiO₂. Im Sinne der Erfindung wird unter einer im Wesentlichen aus SiO₂-bestehenden Schutzschicht verstanden, daß die Schutzschicht zu wenigstens 80 Gew.-%, weiter bevorzugt zu wenigstens 90 Gew.-%, noch weiter bevorzugt zu wenigstens 95 Gew.-% aus SiO₂ besteht. Äußerst bevorzugt besteht diese Schutzschicht zu wenigstens 98 Gew.-% aus SiO₂. Die Angabe Gew.-% bezieht sich dabei auf das Gesamtgewicht der SiO₂-haltigen Schutzschicht.

Überraschenderweise weisen die erfindungsgemäßen wetterstabilen Pertgianzpigmente mit einer organisch-chemischen Nachbeschichtung, die mindestens ein α-Silan der Formel -O₍₄₋ₙ₋ₘ₎-Si(-R¹)ₘ-(CH₂-Y)ₙ umfasst, eine nach Schwitzwasserbelastung bessere Adhäsion (in der Gitterschnittprüfung gemäß DIN EN ISO 2409) in einem Bindemittelsystem, beispielsweise eines Lackes, auf, so daß im Schwitzwassertest, beispielsweise eines Lackes, eine deutlich verbesserte Beständigkeit erhalten wird. Darüber hinaus hat sich gezeigt, daß auch die Abbildeschärfe (DOI, distinctness of image) verbessert ist.

Die im Stand der Technik bekannten organisch-chemischen Nachbeschichtungen von wetterstabilen Perlglanzpigmenten verwenden unter anderem auch organofunktionelle Silane. Bei diesen organofunktionellen Silanen handelt es sich entweder um Alkylsilane oder um funktionelle γ-Silane, bei denen die funktionelle Gruppe über einen C₃H₈-Spacer (Propylen) an das Si-Atom gebunden ist.

Werden anstelle der herkömmlichen γ-Silane α-Silane der Formel (I) verwendet, so erhält man überraschenderweise vorteilhafte Eigenschaften in Bezug auf den Schwitzwassertest nach DIN 50 017. Insbesondere das Quellverhalten nach DIN 53230 und der DOI (distinctness of image) sind gegenüber dem Stand der Technik verbessert.

Bei den erfindungsgemäß verwendeten Silanen handelt es sich um sogenannte α-Silane. Von diesen Silanen ist bekannt, das sie gegenüber den konventionellen γ-Silanen unterschiedliche Eigenschaften aufweisen (z.B. J. Pfeiffer, und V. Stanjek, farbe + lack 111, 2005(11), S. 38 - 43). So sind insbesondere die Hydrolyse- und Kondensationsreaktionen gegenüber vergleichbaren γ-Silanen beschleunigt.

Der Rest R¹ der Formel (I) ist ein Wasserstoffatom oder ein Si-C gebundener C₁-C₂₀-Kohlenwasserstoffrest oder ein C₁-C₁₅-Kohlenwasserstoffoxyrest, in den jeweils eine oder mehrere, einander nicht benachbarte Methyleneinheiten durch Gruppen -O-, -CO-, -COO-, -OCO-, oder-OCOO-, -S-, oder -NR^{x}- ersetzt sein können und in denen eine oder mehrere, einander nicht benachbarte Methineinheiten durch Gruppen, -N, -N=N-, oder -P=ersetzt sein können, wobei R¹ gleich oder verschieden sein kann.

Bevorzugt ist R¹ ein unsubstituierter C₁-C₁₅-Kohlenwasserstoffrest, besonders bevorzugt ein unsubstituierter C₁-C₈-Kohlenwasserstoffrest und ganz besonders bevorzugt ein unsubstituierter C₁-C₃-Kohlenwasserstoftrest oder ein Acetylrest, Am meisten bevorzugt ist R¹ eine Ethyl- oder eine Methylgruppe. Derartige α-Silane besitzen durch diesen Kohlenwasserstoffrest zusätzliche hydrophobe Eigenschaften, wobei die Hydrophobizität mit abnehmender Kettenlänge von R¹ abnimmt.

Gemäß einer weiteren bevorzugten Variante ist der Si-C gebundene C₁-C₂₀-Kohlenwasserstoffrest R¹ mit wenigstens einer mit einem Bindemittelsystem reaktiven funktionellen Bindungsgruppe substituiert, wobei die reaktive funktionelle Bindungsgruppe aus der Gruppe, die aus -CN, -NCO, -NR^{x}₂, - COOH, -COOR^{x}, -Acryl, -Methacryl, -Epoxy, Ureido, -SH, -OH, -CONR^{x}₂ und Mischungen davon besteht, ausgewählt wird.

Bei weiteren bevorzugten Ausführungsformen ist in Formel (I) n = 1 und m = 0, so daß das α-Silan keinen organischen Rest R¹ aufweist.

Die funktionelle Gruppe Y weist eine ausreichende chemische Reaktivität auf, um eine chemische Bindung zum Bindemittel des Applikationsmediums oder mit einer Kunststoffkomponente eines Kunststoffes ausbilden zu können. In Abhängigkeit von dem Bindemittel des Applikationsmediums, beispielsweise eines Lackes oder einer Farbe oder eines Kunststoffes, wird die funktionelle Gruppe Y ausgewählt. Wenn in dem α-Silan gemäß Formel (I) n = 2 oder 3 ist, dann können die zwei oder drei funktionellen Gruppen Y gleich oder voneinander verschieden sein, Y kann beispielsweise eine -CN, -NCO, -NR^{x}₂, - CHNR^{x}₂, CH₂-NR^{x}, Morpholino, -COOH, -COOR^{x}, -OC(O)C(R) =CH₂, -Epoxy, bevorzugt Glycidoxy, -C(O)-NH-C(O)-NR^{x}₂, -SH, -OH oder Mischungen davon sein.

R^{x} kann beispielsweise ein Wasserstoffatom oder linearer, verzweigter und/oder cyclischer C₁-C₁₅-Kohrenwasserstoff- oder Arylrest sein, wobei R^{x}, wenn mehrere R^{x} an einem α-Silan gemäß Formel (I) vorhanden sind, gleich oder unabhängig voneinander verschieden sein können.

Bevorzugt ist Y eine -NR^{x}₂, -CHNR^{x}₂, - CH₂-NR^{x} oder -CHNH₂ - CH₂-NH₂ Gruppe, wobei R^{x} unabhängig voneinander ein Wasserstoffatom oder ein linearer oder verzweigter und/oder cyclischer Alkylrest oder ein Arylrest mit 4 bis 12 C-Atomen, bevorzugt mit 5 bis 8 C-Atomen, sein kann. Im Fall von Cycloalkylresten können bei der Variante Y = -NR^{x}₂ die beiden R^{x}-Reste ein Cycloalkyl, welches das N-Atom, vorzugsweise symmetrisch, zu einem entsprechenden Heterozyklusring einschließt (z.B. C₅H₁₀N-=Piperidyl), symbolisieren. Die Cycloalkylreste können auch weitere Heteroatome wie Sauerstoff und/oder Schwefel enthalten. Besonders bevorzugt handelt es sich bei R^{x} um relativ hydrophobe Reste, wie beispielsweise einen Phenyl-, Morpholino- oder Cyclohexylrest. Durch derartige Funktionen erhält das Silan und damit auch die Oberfläche der erfindungsgemäßen Perlglanzpigmente relativ hydrophobe Eigenschaften, hat jedoch aufgrund der Aminohaftgruppe noch eine gute Anbindung an das Bindemittel.

Gemäß Formel (I) kann das α-Silan (4-n-m) Sauerstoffatome aufweisen, wobei mindestens eines dieser Sauerstoffatome eine Bindung, vorzugsweise eine kovalente Bindung, mit der SiO₂-Oberfläche des Periglanzpigmentes eingeht. Für den Fall (4-n-m) = 2 oder 3 können die weiteren Sauerstoffatome entweder ebenfalls an die Perlglanzoberfläche anbinden oder aber auch zwischen benachbarten Silanen untereinander unter Kondensation Bindungen ausbilden. Weiterhin ist es möglich, dass diese Sauerstoffatome auch zu einer noch nicht kondensierten Hydroxy- oder einer nicht hydrolysierten Alkoxygruppe gehören.

Verwendbare α-Silane der Formel (I) sind kommerziell von der Fa. Wacker, Burghausen, Deutschland unter dem Markennamen Genlosil und entsprechender Handelsnummer erhältlich.

Beispielsweise handelt es sich um:
Aminomethyldimethylmethoxysilan, Aminomethylmethyldimethoxysitan, Aminomethyltrimethoxysilan, N-Methylaminomethyldimethylmethoxysilan, N-Methylaminomethylmethyldimethoxysilan, N-Methylaminomethyltrimethoxysilan, N-Ethylaminomethyldimethylmethoxysilan, N-Ethylaminomethylmethyldimethoxysilan, N-Ethylaminomethyltrimethoxysilan, N-Cyclohexylaminomethyltrimethoxysilan,
N-Cyclohexylaminomethylmethyldimethoxysilan, N-.
Phenylaminotrimethoxysilan, N-Phenylaminomethyltrimethoxysilan, N,N-Dimethylaminomethyldimethylmethoxysilan,
N,N-Dimethylaminomethylmethyldimethoxysilan,
N,N-Dimethylaminomethyltrimethoxysilan,
N,N-Diethylaminomethyldimethylmethoxysilan,
N,N-Diethylaminomethylmethyldimethoxysilan,
N,N-Diethylaminomethyltrimethoxysilan,
N,N-Dipropylaminomethyldimethylmethoxysilan
N,N-Dipropylaminomethylmethyltrimethoxysilan,
N,N-Dipropylaminomethyltrimethoxysilan,
N,N-Methylethylaminomethyldimethylmethoxysilan,
N,N-Methylethylaminomethylmethyldimethoxysilan,
N,N-Methylethylaminomethyltrimethoxysilan,
Anilinomethyldimethylmethoxysilan,
Anilinomethylmethyldimethoxysilan, Anilinomethyltrimethoxysilan, Morpholinomethyldimethylmethoxysilan,
Morpholinomethylmethyldimethoxysilan,
Morpholinomethyltrimethoxysilan,
N,N,N-Trimethylammoniummethyldimethylmethoxysilan,
N,N,N-Trimethylammoniummethylmethyldimethoxysilan,
N,N,N-Trimethylammoniummethyltrimethoxysilan,
N,N,N-Triethylammoniummethyldimethylmethoxysilan,
N,N,N-Triethylammoniummethylmethyldimethoxysilan,
N,N,N-Triethylammoniummethyltrimethoxysilan,
Acryloxymethyldimethylmethoxysilan, Acryloxymethylmethyldimethoxysilan, Acryloxymethyltrimethoxysilan, Methacryloxymethyldimethylmethoxysilan, Methacryloxymethylmethyldimethoxysilan, Methacryloxymethyltrimethoxysilan, Isocyanatomethyldimethylmethoxysilan, Isocyanatomethylmethyldimethoxysilan, Isocyanatomethyltrimethoxysilan,
Methylcarbamatomethyldimethylmethoxysilan,
Mercaptomethyltrimethoxysilan, Glycidoxymethyldimethylmethoxysilan, Glycidoxymethylmethyldimethoxysilan, Glycidoxymethyltrimethoxysilan, Aminomethyldimethylethoxysilan, Aminomethylmethyldiethoxysilan, Aminomethyltriethoxysilan, N-Methylaminomethyldimethylethoxysilan, N-Methylaminomethylmethyldiethoxysilan, N-Methylaminomethyltriethoxysilan, N-Ethylaminomethyldimethylethoxysilan,
N-Ethylaminomethylmethyldiethoxysilan,
N-Ethylaminomethyltriethoxysilan, N-Cyclohexylaminomethyltriethoxysilan, N-Cyclohexylaminomethylmethyldiethoxysilan, N-Phenylaminotriethoxysilan, N-Phenylaminomethyltriethoxysilan, N,N-Dimethylaminomethyldimethylethoxysilan
N,N-Dimethylaminomethylmethyldiethoxysilan,
N,N-Dimethylaminomethyltriethoxysilan,
N,N-Diethylaminomethyldimethylethoxysilan
N,N-Diethylaminomethylmethyldiethoxysilan
N,N-Diethylaminomethyltriethoxysilan, N,N-Dipropylaminomethyldimethylethoxysilan,
N,N-Dipropylaminomethylmethyltriethoxysilan,
N,N-Dipropylaminomethyltriethoxysilan,
N,N-Methylethylaminomethyldimethylethoxysilan.
N,N-Methylethylaminomethylmethyldiethoxysilan,
N,N-Methylethylaminomethyltriethoxysilan,
Anilinomethyldimethylethoxysilan, Anilinomethylmethyldiethoxysilan, Anilinomethyltriethoxysilan, Morpholinomethyldimethylethoxysilan, Morpholinomethylmethyldiethoxysilan, Morpholinomethyltriethoxysilan,
N,N,N-Trimethylammoniummethyldimethylethoxysilan,
N,N,N-Trimethylammoniummethylmethyldiethoxysilan,
N,N,N-Trimethylammoniummethyltriethoxysilan,
N,N,N-Triethylammoniummethyldimethylethoxysilan,
N,N,N-Triethylammoniummethylmethyldiethoxysilan,
N,N,N-Triethylammoniummethyltriethoxysilan,
Acryloxymethyldimethylethoxysilan, Acryloxymethylmethyldiethoxysilan, Acryloxymethyltriethoxysilan, Methacryloxymethyldimethylethoxysilan, Methacryloxymethylmethyldiethoxysilan, Methacryloxymethyltriethoxysilan, Isocyanatomethyldimethylethoxysilan, Isocyanatomethylmethyldiethoxysilan, Isocyanatomethyltriethoxysilan, Methylcarbamatomethyldimethylethoxysilan,
Methylcarbamatomethylmethyldiethoxysilan,
Methylcarbamatomethyltriethoxysilan,
Mercaptomethyldimethylethoxysilan, Mercaptomethylmethyldiethoxysilan, Mercaptomethyltriethoxysilan, Glycidoxymethyldimethylethoxysilan Glycidoxymethylmethyldiethoxysilan oder Glycidoxymethyltriethoxysilan oder Mischungen hiervon.

Bei einer bevorzugten Ausführungsform besteht die organisch-chemische Nachbeschichtung aus einem oder mehreren voneinander verschiedenen α-Silanen mit der Formel (I)

-O₍₄₋ₙ₋ₘ₎-Si(-R¹)ₘ(-CH₂-Y)ₙ.

Bei bevorzugten Ausführungsformen ist in Formel (I) n = 1 und m = 1. Weiterhin ist bevorzugt, daß der Rest R¹ ein unsubstituierter C₁-C₃-Kohlenwasserstoffrest, bevorzugt eine Methylgruppe, ist. Gemäß einer weiteren bevorzugten Variante ist n = 1 und m = 0.

Gemäß einer weiteren Variante der vorliegenden Erfindung enthält die organisch-chemische Nachbeschichtung kein Silan ohne funktionelle Bindungsgruppe Y und ohne funktionelle Bindungsgruppen bei R¹. Es hat sich überraschend gezeigt, daß die Anwendungseigenschaften im Schwitzwassertest und bei der Abbildungsschärfe (DOI) der erfindungsgemäßen Metalloxid-haltigen Perlglanzpigmente noch weiter verbessert werden können, wenn keine Silane ohne funktionelle Bindungsgruppe, also beispielsweise keine Alkylsilane, in der organisch-chemischen Nachbeschichtung enthalten sind.

Bei einer weiteren Ausführungsform umfasst die organisch-chemische Nachbeschichtung des erfindungsgemäßen Perlglanzpigmentes zusätzlich wenigstens ein γ-Silan mit der Formel (III)

-O₍₄₋ₙ₋ₘ₎-Si(-R²)ₘ(-CH₂-CH₂-CH₂-Y)ₙ (III)

wobei 1 ≤ n+m ≤ 3; m = 0 - 2; n = 1 - 3 ist und
R² ein Wasserstoffatom oder ein Si-C gebundener C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N-, -N=N-, oder-P=ersetzt sein können, wobei R² unabhängig voneinander gleich oder verschieden sein kann, und R^{x} ein Wasserstoffatom oder linearer, verzweigter und/oder cyclischer C₁-C₁₅-Kohlenwasserstoff- oder Arylrest ist und Y eine mit einem Bindemittelsystem oder einer Kunststoffkomponente funktionelle Bindungsgruppe ist.

Die Gruppe R² ist vorzugsweise ein Si-C gebundener C₁-C₁₅-Kohlenwasserstoffrest, bevorzugt um einen C₁-C₃ -Kohlenwasserstoffrest und besonders bevorzugt Methyl oder Ethyl.

Es hat sich überraschend gezeigt, daß die gleichzeitige Verwendung von α-Silan(en) und γ-Silan(en) die anwendungstechnischen Eigenschaften wie Schwitzbeständigkeit und Abbildungsschärfe (DOI) ebenfalls verbessert.

Gemäß einer weiteren bevorzugten Ausführungsform der Erfindung ist der Si-C gebundene C₁-C₂₀-Kohlenwasserstoffrest R² mit wenigstens einer mit einem Bindemittelsystem reaktiven funktionellen Bindungsgruppe substituiert, wobeidie reaktive funktionelle Bindungsgruppe aus der Gruppe, die aus -CN, -NCO, - NR^{x}₂, -COOH, -COOR^{x}, -Acryl, -Methacryl, -Epoxy, -SH, -OH, Ureido, -CONR^{x}₂ und Mischungen davon besteht, ausgewählt wird.

Die mit einem Bindemittelsystem oder einer Kunststoffkomponente reaktive funktionelle Bindungsgruppe Y wird bevorzugt aus der Gruppe, die aus Acrylat-, Methacrylat-, Vinyl-, Amino-, γ-(2-Aminnethyl)amino-, Cyanat-, Isocyanat-, Epoxy-, Hydroxy- Thiol-, Ureido-, Carboxylgruppen und Mischungen davon besteht, ausgewählt.

Bevorzugt ist in Formel (III) n = 1 und m = 1. Bei einer besonders bevorzugten Ausführungsformen ist in Formel (III) n = 1 und m = 0.

Derartige γ-Silane sind kommerziell verfügbar und werden beispielsweise von der Fa. Degussa, Rheinfelden, Deutschland, hergestellt und unter dem Handelsnamen "Dynasylan^{®}" vertrieben. Weitere Produkte können von der Fa. OSi Specialties (Silquest^{®}-Silane) oder von der Fa. Wacker (Standard-γ-Silane aus der GENIOSIL^{®}-Produktgruppe) bezogen werden.

Beispiele hierfür sind 3-Methacryloxypropyltrimethoxysilan (Dynasylan MEMO, Silquest A-174NT), Vnyltri(m)ethoxysilan (Dynasylan VTMO bzw. VTEO, SilquestA-151 bzw. A-171), 3-Mercaptopropyltri(m)ethoxysilan (Dynasylan MTMO oder 3201, Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfid (Silquest A-1289), gamma-Isocyanatopropyltrimethoxysilan (Sitquest A-Link 35, GENIOSIL GF40) oder 3-(Triethoxysilyl)propylbemsteinsäureanhydrid (GENIOSIL GF 20).

Bei einer besonders bevorzugten Ausführungsform enthält das die SiO₂-Schicht modifizierende organofunktionelle Silangemisch neben wenigstens einem α-Silan wenigstens ein aminofunktionelles γ-Silan. Die Aminofunktion ist eine funktionelle Gruppe, die mit den meisten in Bindemitteln, beispielsweise von Lacken oder Farben, vorhandenen Gruppen verschledene chemische Wechselwirkungen oder Reaktionen eingehen kann. Dies kann eine kovalente Bindung, wie z.B. mit Isocyanat- oder Carboxylatfunktionen des Bindemittels, oder Wasserstoffbrückenbindungen wie mit OH- oder COOR- Funktionen oder auch ionische Wechselwirkungen beinhalten. Ein aminofunktionelfes γ-Silan ist daher für den Zweck der chemischen Anbindung des Effektpigmentes an verschiedenartige Bindemittel sehr gut geeignet.

Bevorzugt werden hierzu folgende Verbindungen genommen: Aminopropyltrimethoxysilan (Dynasylan AMMO, Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Bis-(gammatrimethoxysilylpropyl)amin (Silquest A-1170), N-ethyl-gammaaminoisobutyltrimethoxysilan (Silquest A-Link 15), N-Phenyl-gammaaminopropyltrimethoxysilan (Silquest Y-9669) und deren Mischungen.

Bei einer weiterhin besonders bevorzugten Ausführungsform umfaßt die organisch-chemische Nachbeschichtung ein oder mehrere α-Silan mit der Formel
- O₍₄₋ₙ₋ₘ₎-Si(-R¹)ₘ(-CH₂-Y)ₙ und ein oder mehrere γ-Silane mit der Formel
- O-₍₄₋ₙ₋ₙ₎Si(-R²)ₘ(-CH₂-CH₂-CH₂-Y)ₙ.

Besonders bevorzugt besteht die organisch-chemische Nachbeschichtung aus den vorstehend genannten α-Silanen und γ-Silanen.

Das Mischungsverhältnis von α-Silan(en) zu γ-Silan(en) beträgt vorzugsweise 1:10 bis 10:1 mol-%. und bevorzugt 1:5 bis 5:1 mol-%. und besonders bevorzugt 1:3 bis 3:1 mol-%.

Bei weiteren bevorzugten Ausführungsformen umfaßt die organisch-chemische Nachbeschichtung ein oder mehrere Silane der Formel

-O₍₄₋ₙ₋ₘ₎-Si(-R¹)ₘ(-CH₂-CH₂-Y)ₙ (IV)

und/oder ein oder mehrere Silane der Formel

-O₍₄₋ₙ-ₘ₎-Si(-R¹)ₘ(-CH₂)ₓ-Y)ₙ (V)

Hierbei ist x eine natürliche Zahl im Bereich 3 < x < 20.
Y, R¹, m und n haben die gleiche Bedeutung bzw. Wertigkeiten wie oben angegeben.

Der Anteil der organisch-chemischen Nachbeschichtung liegt bevorzugt zwischen 0,1 und 6 Gew.-%, vorzugsweise zwischen 0,2 und 5 Gew.-%, jeweils bezogen auf das Gesamtgewicht des Pigmentes. Der Anteil des mindestens einen α-Silans beträgt bevorzugt zwischen 0,1 und 5 Gew.-%, vorzugsweise zwischen 0,3 und 3 Gew.-%, jeweils bezogen auf das Gesamtgewicht des Pigmentes.

Überraschenderweise wurde nun gefunden, dass eine ausgezeichnete UV- und Wetterstabilität von Perlglanzpigmenten erreicht wird durch ein Perlglanzpigment mit Metalloxid-haltigem, plättchenförmigen Substrat, welches auf dem plättchenförmigem Substrat eine erste Schutzschicht, umfassend eine vorzugsweise direkt auf dem Metalloxid-haltigen, plättchenförmigen Substrat aufgebrachte Schicht mit oder aus Ceroxid und/oder Ceroxid-Hydrat und/oder Cerhydroxid und im weiteren Schichtaufbau eine Schicht aus SiO₂, die eine organisch-chemische Nachbeschichtung, wie im Anspruch 1 angegeben, besitzt, aufgebracht ist.

Trotz des niedrigen Brechungsindexes von SiO₂ weisen die Pigmente überraschenderweise einen sehr guten Glanz auf. Es hat sich ferner überraschend gezeigt, dass bereits dünne Schichtdicken an SiO₂ für eine hohe UV-Stabilität ausreichend sind. Dies war im Hinblick auf die Ausführungen in der DE 4207723 A1, S. 2, Zeile 19-21: "Mit Silicat- bzw. mit Al₂O₃ beschichtete Pigmente sind schwer dispergierbar und weisen zusätzlich Glanzeinbußen in Druckfarben und Lackabstrichen auf" nicht zu erwarten.

Die Menge an eingesetztem Cer, vorzugsweise in Form von Ceroxid und/oder Ceroxid-Hydrat und/oder Cerhydroxid, liegt vorzugsweise zwischen 0,05 bis 3,0 Gew.-%, weiter vorzugsweise zwischen 0,1 und 1,0 Gew.-% und bevorzugt zwischen 0,2 und 0,7 Gew.-%, jeweils bezogen auf das Gesamtgewicht des Pigmentes. Der Gewichtsanteil sollte, bezogen auf die eingesetzte Menge an Pigment, vorzugsweise nicht über 1,0 Gew.-% liegen, da andemfalls Verluste der optischen Qualität des Pigmentes zu stark sein könnten. Unterhalb eines Gewlchtsantells von 0,1 Gew.-% wiederum ist die zusätzliche UV-Stabilisierung in der Regel nicht ausgeprägt genug.

Im Einzelfall kann der Gewichtsanteil von der Feinheit und damit einhergehend von der spezifischen Oberfläche des Periglanzpigmentes sowie von der Schichtdicke der TiO₂-Schicht abhängen. Feinere Pigmente und dickere TiO₂-Schichten können auch einen höheren Gehalt an Ceroxid und/oder Cerhydroxid und/oder Ceroxidhydrat erfordern.

Der SiO₂-Gehalt der erfindungsgemäßen Perlglanzpigmente liegt vorzugsweise bei einem Anteil von 0,5 bis 8 Gew.-% des Pigmentes, bevorzugt von 0,6 bis 7 Gew.-%, weiter bevorzugt von 0,7 Gew.-% bis 5 Gew.-% und besonders bevorzugt von 0,8 bis 2 Gew.-%, jeweils bezogen auf das Gesamtgewicht des Pigmentes. Auch hier kann im Einzelfall die SiO₂ Menge von der Feinheit und damit einhergehend von der spezifischen Oberfläche des Perlglanzpigmentes sowie von der Schichtdicke der TiO₂-Schicht abhängen. Feinere Pigmente und dickere TiO₂-Schichten können ebenfalls einen höheren SiO₂-Gehalt erfordern. Oberhalb von 8 Gew.-% SiO₂ beobachtet man im Allgemeinen keinerlei weitere Verbesserung der Wetter- und UV-Stabilität. Oft sogar werden die Eigenschaften schlechter, vermutlich da die dickeren Schutzschichten spröde und/oder brüchig sind und leichter Risse entstehen, so dass die Photoaktivität des beschichteten TiO₂ nicht mehr wirksam genug unterdrückt wird. Unterhalb von 0,5 Gew.-% kann die schützende Wirkung der SiO₂-Schicht zu gering sein.

In der SiO₂-Schicht können neben SiO₂ auch Hydroxide, Suboxide und/oder Oxidhydrate des Siliziums enthalten sein.

Es wird vermutet, dass die besseren Wetter- und UV-Beständigkeiten der erfindungsgemäßen Penglanzpigmente u.a. auf die optimale Schichtenfolge der beiden Oxide zurückzuführen ist. Ceroxid und/oder Ceroxid-Hydrat und/oder Cerhydroxid ist als sehr wirksames Mittel zur Unterdrückung der photochemischen Aktivität von TiO₂ an sich bekannt. Die Wirksamkeit beruht wohl vor allem auf dem bekannten Ce(III)/Ce(IV) Redoxsystem. Hierdurch können Radikale, die infolge der photochemischen Aktivität des TiO₂ an dessen Oberfläche generiert werden, wirksam abreagieren. Offenbar ist diese Reaktion besonders wirksam, wenn Ceroxid und/oder Ceroxid-Hydrat und/oder Cerhydroxid bereits als erste Schicht mit direktem Kontakt zur TiO₂-Oberfläche des vorgelegten Pigments abgeschieden wird.

Bei der vorliegenden Erfindung ist es daher bevorzugt, die Ceroxid und/oder Ceroxid-Hydrat und/oder Cerhydroxid -Schicht direkt auf der TiO₂-Schicht aufzubringen. Die Ceroxid-und/oder Ceroxid-Hydrat-und/oder Cerhydroxid-Schicht muß aber nicht direkt auf der TiO₂-Schicht aufgebracht werden. Die Ceroxid-und/oder Ceroxid-Hydrat-und/oder Cerhydroxidschicht wird vorzugsweise durch alleinige Fällung, d.h. nicht als Mischfällung aufgebracht, so dass die Ceroxid-und/oder Ceroxid-Hydrat-und/oder Cerhydroxidschicht vorzugsweise im Wesentlichen frei von weiteren Metalloxiden ist.

Bevorzugt ist die Cer-haltige Schicht aus Ceroxid und/oder Ceroxid-Hydrat und/oder Cerhydroxid eine diskrete Schicht, die mit der darunterliegenden Schicht, beispielsweise Metalloxidschicht wie Titanoxidschicht, keine Mischschicht ausbildet.

Des Weiteren ist es bevorzugt, die SiO₂-Schicht direkt auf der Ceroxid-und/oder Ceroxid-Hydrat und/oder Cerhydroxidschicht aufzubringen. Äußerst bevorzugt wird die SiO₂-Schicht aus einem überwiegend organischen Lösungsmittelgemisch unter Verwendung von Sol-Gel-Verfahren, wie nachstehend erläutert, aufgebracht. Es ist ferner bevorzugt, dass die SiO₂-Schicht ebenfalls eine diskrete Schicht ist, die mit der darunterliegenden Cer-haltigen Schicht aus Ceroxid und/oder Ceroxid-Hydrat und/oder Cerhydroxid keine Mischschicht ausbildet.

Die erfindungsgemäßen Pigmente weisen mithin vorzugsweise einen Schutzschichtaufbau aus einer Ceroxid und/oder Ceroxid-Hydrat und/oder Cerhydroxidschicht, direkt nachfolgend einer SiO₂-Schicht, auf die die angegebene Oberflächenmodifizierung mit wenigstens einem α-Silan mit wenigstens einer funktionellen Bindungsgruppe Y aufgebracht ist. Dieser Schutzschichtaufbau wird vorzugsweise direkt auf eine TiO₂-Schicht aufgebracht.

Die nachfolgende SiO₂-Schicht, d.h. die zweite Schutzschicht, stellt in jedem Fall eine weitere Barriere dar. Sie schützt die Perlglanzpigmentoberfläche vor eindringendem Wasser und hält umgekehrt radikalische Spezies, die die Ceroxid-und/oder Ceroxid-Hydrat-und/oder Cerhydroxidschicht möglicherweise passiert haben, zurück.

Zudem kann die Silikatschicht auch vermutlich aufgrund ihrer elektronischen Natur stabilisierend wirken. Es wird vermutet, dass die energetische Lage der Bandkanten von SiO₂ im Vergleich zu jener von TiO₂ derart günstig ist, dass der Transfer insbesondere von Löchern, aber auch von Elektronen, die nach Absorption von UV-Photonen im Halbleiter TiO₂ entstehen, an die Grenzfläche des Pigmentes wirksam unterdrückt wird ("Diodeneffekt").

Eine weitere erfindungsgemäße Ausführung besteht darin, dass das plättchenförmige Substrat eine oder mehrere Metalloxidschichten, vorzugsweise eine Schicht aus Zinnoxid, aufweist. Die Schicht aus Zinnoxid kann aufgebracht werden, wie beispielsweise in Beispiel 1 und 5 der DE 3535818 A1 beschrieben, die hiermit unter Bezugnahme aufgenommen wird. Diese Schicht wird vorzugsweise bereits beim Herstellungsprozess des Substrates aufgebracht und anschließend calciniert.

Zinnoxid wird bei der Herstellung von Perlglanzpigmenten verwendet, um einer TiO₂-Schicht, die auf das Substrat, vorzugsweise Glimmerplättchen, gefällt wird, eine Rutilstruktur zu induzieren. TiO₂ wächst auf Glimmer in einer Anatasstruktur auf, die aufgrund ihrer höheren Photoaktivität unerwünscht ist. Eine Vorbeschichtung des Substrats mit SnO₂ jedoch induziert eine Rutilmodifikation der nachfolgenden TiO₂-Schicht, da beide Oxide eine ähnliche Kristallstruktur aufweisen.

Es wurde nun überraschenderweise gefunden, dass eine zusätzliche Beschichtung mit SnO₂ nach einer TiO₂-Beschichtung, d.h. vor Aufbringung der ersten Schutzschicht aus oder mit Ceroxid und/oder Ceroxid-Hydrat und/oder Cerhydroxid und der zweiten Schutzschicht aus SiO₂ die Wetterstabilität nochmals steigert. Die SnO₂-Schicht wird dabei vorzugsweise direkt auf die TiO₂-Schicht aufgebracht.

Bei weiteren erfindungsgemäßen Ausführungsformen können zwischen der ersten Schutzschicht aus oder mit Ceroxid und/oder Ceroxid-Hydrat und/oder Cehydroxid und der zweiten Schutzschicht aus SiO₂ weitere Schichten, vorzugsweise Metalloxidschichten, angeordnet sein. Bei diesen Metalloxiden handelt es sich bevorzugt um ZrO₂.

Bei einer weiteren bevorzugten Ausführungsform besteht die erste Schutzschicht aus Ceroxid und/oder Ceroxid-Hydrat und/oder Cerhydroxid und die zweite Schutzschicht aus SiO₂

Als Perlglanzpigmente können alle gängigen kommerziell erhältlichen Pigmente eingesetzt werden, wie beispielsweise die nachstehend Angeführten.

Die Perlglanzpigmente weisen ein plättchenförmiges Substrat auf, welches vorzugsweise aus der Gruppe, bestehend aus Glimmer, Talkum, Sericit, Kaolin sowie SiO₂-, Glas-, Graphit-, Al₂O₃-Pfättchen und deren Mischungen, ausgewählt wird. Bevorzugte Substrate sind hierbei natürlicher oder synthetischer Glimmer, SiO₂-, Glas-, oder Al₂O₃-Plättchen.

Bevorzugt sind SiO₂-, Glas-, oder Al₂O₃-Plättchen als Substrate, deren Standardabweichung der Dickenverteilung geringer als 20%, bevorzugt geringer als 15% und besonders bevorzugt geringer als 10% ist. Diese Substrate verfügen über besonders glatte Oberflächen. Mit diesen Substraten lassen sich daher besonders farbintensive Perlglanzpigmente mit starken Farbflops herstellen.

Besonders bevorzugt sind hierbei Glasplättchen, da diese am leichtesten herzustellen sind. Ganz besonders bevorzugt ist die mittlere Dicke der Glasplättchen geringer als 500 nm und noch weiter bevorzugt geringer als 350 nm. Derart dünne Glasplättchen eignen sich besonders gut für Automobilanwendungen, da hier die Schichtdicken der Basislackschichten sehr gering sind (12 - 15 µm) und der Trend zu noch geringeren Schichtdicken geht. Derart dünne Substrate sind die Voraussetzung für relativ dünne Perlglanzpigmente, die erst sich in derart dünnen Lacksystemen optimal orientieren können. Optimal orientierte Pigmente bewirken auch optimale optische Eigenschaften wie beispielsweise Glanz und Farbflop.

Auf dieses niedrig brechende plättchenförmige Substrat werden weitere, bevorzugt hochbrechende, Schichten abgeschieden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, ausgewählt.

Bevorzugt werden die Substrate der Perlglanzpigmente mit einem mehrschichtigen Schichtaufbau mit oder aus Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in derselben Schicht vorliegen.

Bevorzugt werden dabei die Substrate der Perlglanzpigmente mit einer oder mehreren Metalloxidschichten aus der Gruppe, bestehend aus oder umfassend TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂ und deren Mischungen, beschichtet. Besonders bevorzugt sind TiO₂ und/oder Fe₂O₃.
Besonders bevorzugt ist TiO₂ in der Rutilmodifikation.

Bei einer weiteren Ausführungsform weist der mehrschichtige Schichtaufbau eine Schichtenfolge auf, bei dem wenigstens eine hochbrechende Schicht und wenigstens eine niedrigbrechende Schicht in alternierender Weise auf einem Substrat angeordnet sind.

Bei der alternierenden Anordnung ist es auch möglich, ein oder mehrere hochbrechende Schichten unmittelbar übereinander und nachfolgend ein oder mehrere niedrigbrechende Schichten unmittelbar übereinander anzuordnen. Wesentlich ist jedoch, dass in dem Schichtaufbau hoch-und niedrigbrechende Schichten vorkommen.

Bevorzugt ist, dass der mehrschichtige Schichtaufbau eine Schichtenfolge aufweist, bei dem wenigstens eine hochbrechende Schicht, wenigstens eine niedrigbrechende Schicht und wenigstens eine hochbrechende Schicht auf einem Substrat nacheinander angeordnet sind.

Auch bei dieser Variante können ein oder mehrere niedrig-bzw. hochbrechende Schichten jeweils unmittelbar übereinander angeordnet sein. Wesentlich ist jedoch, dass in dem Schichtaufbau von innen nach außen hoch und niedrig-und wiederum hochbrechende Schichten angeordnet sind.

Vorzugsweise enthält oder besteht die wenigstens eine hochbrechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂ und deren Mischungen. Die niedrigbrechende Schicht enthält oder besteht vorzugsweise aus Metalloxid und/oder Metallhydroxid aus der Gruppe, bestehend aus SiO₂, Al₂O₃, B₂O₃ und Mischungen davon.

Perlglanzpigmente, die hoch und niedrigbrechende Schichten aufweisen, ergeben besonders intensive Interferenzfarben. Insbesondere Perlglanzpigmente mit hochbrechenden und einer niedrigbrechenden und wiederum einer hochbrechenden Schicht sind besonders bevorzugt. Eine Schichtfolge mit oder aus TiO₂ / SiO₂ / TiO₂ und optional noch einer Schicht mit Fe₂O₃ intensive Goldtöne ergeben können und sind besonders bevorzugt.

Bei einer weiteren Ausführungsform bestehen die Perlglanzpigmente aus Glassplattchen als Substrate, welche beidseitig mit semitransparenten Metallschichten beschichtet sind.

Die Metalle der semitransparenten Metallschichten sind bevorzugt aus der Gruppe bestehend aus Silber, Aluminium, Chrom, Nickel, Gold, Platin, Palladium, Kupfer, Zink, deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Als Metalloxid-haltiges plättchenförmiges Substrat, welches erfindungsgemäß mit der Schutzdeckschicht versehen wird, werden vorzugsweise folgende Substrate verwendet:
- TiO₂ und/oder Eisenoxid beschichteten Glimmerplättchen,
- TiO₂ und/oder Eisenoxid beschichteten Glasplättchen,
- TiO₂ und/oder Eisenoxid beschichteten Aluminiumoxidplättchen,
- TiO₂ und/oder Eisenoxid beschichteten SiO₂-Plättchen,
- Bismutoxychloridplättchen,
- reine TiO₂-Plättchen
   sowie Mischungen all dieser Substrate.

Der Brechungsindex der Metalloxidschicht ist, um einen guten Perlglanzeffekt zu ergeben, größer als 1,8, bevorzugt größer als 2,2, weiter bevorzugt größer als 2,3, noch weiter bevorzugt größer als 2,4, und besonders bevorzugt 2,5 oder größer.

Bevorzugt werden bei der vorliegenden Erfindung mit TiO₂ beschichtete Substrate mit der vorstehend beschriebenen Schutzschicht versehen. Mit TiO₂ und / oder Eisenoxid beschichtete Glimmerpigmente sind beispielsweise unter dem Namen PHOENIX^{®} (Fa. Eckart) im Handel erhältlich. Mit TiO₂ und/oder Fe₂O₃ beschichtete Al₂O₃-Flakes werden unter dem Handelsnamen Xirallic^{®} und entsprechend beschichtete SiO₂-Flakes unter dem Handelsnamen Colorstream^{®} von der Fa. Merck angeboten. Mit TiO₂ und / oder Eisenoxid beschichtete Glasflakes werden z.B. von der Fa. Engelhard, USA unter der Bezeichnung Firemist^{®} oder von der Fa. Merck, Darmstadt, unter der Bezeichnung MIRAVAL^{®} angeboten. Auch mehrschichtige Interferenzpigmente, wie sie z.B. in der DE 19618569 beschrieben werden, bestehend aus einem Trägermaterial, das mit alternierenden Schichten von Metalloxiden mit niedriger und hoher Brechzahl beschichtet ist, können erfindungsgemäß nachbeschichtet werden.

Die vorgenannten Pigmente lassen sich hervorragend zunächst mit einer ersten Schutzschicht aus oder mit Ceroxid und/oder Ceroxid-Hydrat und/oder Cerhydroxid und dann mit einer zweiten Schutzschicht aus SiO₂ und nachfolgender organisch-chemischer Nachbeschichtung gegenüber der durch UV-Licht induzierten photokatalytischen Aktivität stabilisieren.

Das erfindungsgemäße Verfahren zur Bereitstellung der erfindungsgemäßen Perlglanzpigmente umfasst die folgenden Schritte:
(a) Suspendieren von Metalloxid-haltigem, plättchenförmigen Substrat in einer Flüssigphase, wobei das Metalloxid einen Brechungsindex von größer als 1,8 hat,
(b) Aufbringen einer Schicht mit Ceroxid und/oder Ceroxid-Hydrat und/oder Cerhydroxid auf das plättchenförmige Substrat,
(c) optionales Aufbringen einer oder mehrerer Metalloxidschichten auf das in Schritt (b) beschichtete Pigment,
(d) Aufbringen einer im Wesentlichen, vorzugsweise vollständig, aus SiO₂-bestehenden Schicht auf das in Schritt (b) oder Schritt (c) beschichtete Pigment,
(e) Beschichten der Pigmentes nach Schritt d) mit einer organisch-chemischen Nachbeschichtung umfassend wenigstens ein α-Silan mit der Formel (III)

   X₍₄₋ₙ₋ₘ₎Si(-R¹)ₘ(-CH₂-Y)ₙ (III)

   wobei 1 ≤ n+m ≤ 3; m = 0 - 2; n = 1 - 3 ist und
   R¹ ein Wasserstoffatom oder ein Si-C gebundener C₁-C₂₀-Kohlenwasserstoffrest oder ein C₁-C₁₅-Kohlenwasserstoffoxyrest ist, in den jeweils eine oder mehrere, einander nicht benachbarte Methyleneinheiten durch Gruppen -O-, -CO-, -COO-, -OCO-, oder -OCOO-, -S-, oder -NR^{x}- ersetzt sein können und in denen eine oder mehrere, einander nicht benachbarte Methineinheiten durch Gruppen, -N-, -N=N-, oder -P=ersetzt sein können, wobei R¹ unabhängig voneinander gleich oder verschieden sein kann und
   R^{x} ein Wasserstoffatom oder ein linearer, verzweigter und/oder cyclischer C₁-C₁₅-Kohlenwasserstoff- oder Arylrest sein kann und
   X eine hydrolysier- und/oder kondensationsfähige Gruppe ist, die aus der Gruppe, die aus Alkoxy, Hydroxy, Acetyloxy, Halogen und Mischungen davon besteht, ausgewählt wird und
   Y eine mit einem Bindemittelsystem oder einer Kunststoffkomponente reaktive funktionelle Bindungsgruppe ist.

Y, R¹ und R^{x} haben die gleichen Bedeutungen wie oben in Formel (I) angegeben.

Die Gruppe X ermöglicht aufgrund ihrer hydrolysier- und/oder kondensationsfähigen Eigenschaften die Bildung wenigstens einer -O-Si-Bindung zum Substrat. Bevorzugt handelt es sich hierbei um Alkoxygruppen, besonders bevorzugt um Methoxygruppen und ganz besonders bevorzugt um Ethoxygruppen, Die Ethoxygruppe hat den Vorteil, lediglich das toxikologisch unbedenkliche Ethanol freizusetzen.

Da die Hydrolysegeschwindigkeiten bei α-Silanen generell deutlich erhöht sind, reagieren auch die Ethanolate im Vergleich zu den Methanolaten mit befriedigender Geschwindigkeit ab. Bei der Verwendung von γ-Silanen hingegen werden aufgrund der größeren Trägheit der Ethanolate häufig auf die das giftige Methanol freisetzenden Methanolate verwendet.

Bei dem erfindungsgemäßen Verfahren kann das Pigment nach Schritt (e) vom Lösemittel getrennt und ggfs. getrocknet werden. Weiterhin kann optional eine Größenklassierung durchgeführt werden.

Bei einer bevorzugten Verfahrensvariante umfasst in Schritt (e) die organisch-chemischen Nachbeschichtung wenigstens ein weiteres γ-Silan mit der Formel (IV)

X₍₄₋ₙ₋ₘ₎Si(-R²)ₘ(-CH₂-CH₂-CH₂-Y)ₙ. (IV)

Bei einer weiteren erfindungsgemäßen Verfahrensvariante ist das wenigstens eine α-Silan mit der Formel X₍₄₋ₙ₋ₘ₎Si(R)ₘ(CH₂-Y)ₙ ein Monomer.

Gemäß einer weiteren Verfahrensvariante ist das wenigstens eine α-Silan mit der Formel X₍₄₋ₙ₋ₘ₎Si(R)ₘ(-CH₂-Y)ₙ ein zu nicht mehr als 50 % vorhydrolysiertes Silan, vorzugsweise ein nicht vorhydrolysiertes Silan.

Bei einer weiteren Verfahrensvariante ist das wenigstens eine γ-Silan mit der Formel
X₍₄₋ₙ₋ₘ₎Si(-R²)ₘ(-CH₂-CH₂-CH₂-Y)ₙ ein zu nicht mehr als 50 % vorhydrolysiertes Silan, vorzugsweise ein nichtvorhydrolysiertes Silan.

Die Fällung der Cerhydroxidschicht findet bevorzugt bei Reaktionstemperaturen von Raumtemperatur bis zur Siedetemperatur des Lösemittels und gegebenenfalls in Gegenwart eines Katalysators statt. Die während der Abscheidungsreaktion freigesetzten Protonen können durch Zusatz einer Base neutralisiert oder teilweise neutralisiert werden, bevor die Abscheidung von Silikat, vorzugsweise SiO₂ gestartet wird. Die Base kann dabei gleichzeitig mit dem Cer-Reagenz zudosiert oder nach dem Einleiten der Cer-Salzlösung zugesetzt werden. Es hat sich überraschend gezeigt, dass die Fällung der eingesetzten Cer-Reagenzien in einem pH-Wertbereich von 3-8, vorzugsweise von 4 bis 7, nahezu vollständig, vorzugsweise vollständig, erfolgt, so dass bei der nachfolgenden Zugabe von vorzugsweise Tetraalkoxysilan und Fällung von SiO₂ eine nahezu reine, vorzugsweise reine, SiO₂-Schicht aufgebracht wird.

Erfindungsgemäß erfolgt die Aufbringung der Cer-haltigen Schicht und der SiO₂-Schicht sequentiell, so dass vorzugsweise voneinander getrennte und diskrete Schichten aufgebracht werden.

Die SiO₂-Schicht wird vorzugsweise durch ein Sol-Gel-Verfahren in überwiegend organischem Lösemittelgemisch aufgebracht. Hierbei wird in Schritt (d) die SiO₂-Schicht unter Verwendung von vorzugsweise Tetraalkoxysilan und optionaler Zugabe von Wasser aufgebracht. Derartige Sol-Gel-Prozesse, die in einem überwiegend organischen Lösemittelgemisch durchgeführt werden, haben Vorteile gegenüber den im Stand der Technik beschriebenen SiO₂-Abscheidungen, die von wässrigen Silikatlösungen ausgehen. Moderne Bindemittelsysteme sind sehr empfindlich in Bezug auf die Anwesenheit von Salzen. Diese stören beispielsweise die kolloidale Stabilität von Bindemittelteilchen und können somit eine unkontrollierte Koagulation des Bindemittelsystems eines Lackes bedingen. Dadurch wird der Lack unbrauchbar. Außerdem fördern wasserlösliche Bestandteile wie Salze in Lackierungen osmotische Prozesse, so dass es durch Ansammlung von Wasser in der Lackschicht zu Blasenbildung und Enthaftungsproblemen kommen kann. Durch ein salzfreies bis salzarmes Herstellungsverfahren eines Perlglanzpigmentes entfallen aufwendige Reinigungsschritte. Das heißt, die erfindungsgemäßen Pigmente weisen nach Aufschlämmung geringere Leitfähigkeiten auf als sonst üblich.

Als überwiegendes Reaktionsnebenprodukt entstehen Alkohole, die zusammen mit dem alkoholischen Lösemittel beispielsweise durch eine Destillation aufgearbeitet und recycelt werden können.

Si(OR)₄ + 2 H₂O → SiO₂ + 4 ROH

Gemäß einer bevorzugten Weiterbildung der Erfindung entspricht die Alkoxygruppe des Tetraalkoxysilans nach ihrer Hydrolyse dem verwendeten organischen Lösemittel. Bei Hydrolyse des Tetraalkoxysilans kommt es zur Freisetzung des korrespondierenden Alkohols, beispielsweise von Methanol, Ethanol oder Propanol wenn R CH₃, C₂H₅ bzw. C₃H₇ ist. Bei Verwendung von Methanol, Ethanol bzw. Propanol als organischem Lösemittel entsteht nach der Hydrolyse mithin kein Gemisch aus verschiedenen Lösemitteln, was prozeßtechnisch einen sehr großen Vorteil im Hinblick auf die Aufarbeitung bzw. Wiederverwendung des Lösemittels darstellt.

Ein weiterer Vorteil liegt in der Verwendung einer monomeren Ausgangssubstanz zur Herstellung der SiO₂-Schicht. Beim Sol-Gel-Prozeß in organischem Lösungsmittel beginnt die Reaktion mit der Hydrolyse des Tetraalkoxysilans, d.h. einem molekularen Monomeren. Wässrige Silikatlösungen wie Wasserglas hingegen liegen stets schon in einer oligomeren Form vorkondensierter -O-Si-O-Einheiten vor. Der Hydrolyseschritt sowie die nachfolgende Kondensation kann daher beim erfindungsgemäß bevorzugt verwendeten Sol-Gel-Prozeß besser kontrolliert werden. Dies wirkt sich vorteilhaft auf die Qualität und Morphologie der gebildeten Schicht aus. Vermutlich ist auch die kontrollierte Abscheidung des SiO₂ im Sol-Gel-Prozeß in überwiegend organischem Lösemittelgemisch für die hohe Qualität der Schicht und die dadurch erhaltene sehr gute Barrierewirkung verantwortlich.

Als Ausgangsverbindungen für die SiO₂-Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Die Katalyse des Sol-Gel-Prozesses zur SiO₂-Abscheidung findet bevorzugt in basischem Milieu statt. Als Katalysatoren werden bevorzugt stickstoffhaltige Basen verwendet. Beispiele hierfür sind Ammoniak, Hydrazin, Methylamin, Ethylamin, Triethanolamin, Dimethylamin, Diethylamin, Methylethylamin, Trimethylamin, Triethylamin, Ethylendiamin, Trimethylendiamin, Tetramethylendiamin, 1-Propylamin, 2-Propylamin, 1-Butylamin, 2- Butylamin, 1-Propylmethylamin, 2-Propylmethylamin, 1-Butylmethylarnin, 2-Butylmethylamin, 1-Propylethylamin, 2-Propylethylamin, 1-Butylethylamin, 2-Butylethylamin, Piperazin und Pyridin.

Diese Basen eignen sich auch für die Neutralisation der bei der Cerhydroxid-Abscheidung gegebenenfalls freigesetzten Protonen.

Zur Neutralisation von gegebenenfalls freigesetzten basischen Bestandteilen bei der Cerhydroxid-Abscheidung eignen sich beispielsweise HNO₃ oder HCl.

Bei einer bevorzugten Variante des erfindungsgemäßen Verfahrens ist die Flüssigphase in Schritt (a) ein überwiegend organisches Lösemittelgemisch. Weiterhin bevorzugt wird die gesamte Beschichtung (b) bis (e) des Perlglanzpigmentes in einem überwiegend organischen Lösemittelgemisch bzw. in einer Flüssigphase mit einem überwiegenden Anteil an organischem Lösemittel durchgeführt. Unter einem überwiegend organischen Lösemittelgemisch wird hierbei ein solches verstanden, welches vorzugsweise weniger als 50 Gew.-% Wasser enthält.

Als organische Lösemittel finden beispielsweise Ether, Ester, Alkohole, Ketone, Aldehyde oder Testbenzin Verwendung.

Bevorzugt werden als überwiegend organische Lösemittelgemische alkoholische Lösemittel mit einem Alkoholanteil von 50 bis 99 Gew.-% verwendet. Bevorzugt liegt der Alkoholanteil bei 60 bis 95 Gew.-% und besonders bevorzugt bei 70 bis 90 Gew.-%. Unterhalb eines Alkoholanteils von 50 Gew.-% können die anwendungstechnischen Eigenschaften der beschichteten Perlglanzpigmente beeinträchtigt werden. Dies kann beispielsweise bei einer Beschichtung einen Glanzverlust bedingen. Oberhalb von 99 Gew.-% schließlich enthält das Reaktionsgemisch offenbar zu wenig Wasser, was zu einer verzögerten Hydrolyse der Alkoxysilane führt, wodurch die Reaktionszeit zu lang wird.

Als Alkohole selbst kommen beispielsweise Methanol, Ethanol, n-Propanol, iso-Propanol, n-Butanol, 2-Methylpropanol, 2-Methoxypropanol, Butylglycol, etc. in Frage. Möglich sind auch Mischungen dieser Alkohole in beliebigen Verhältnissen.

Der Restanteil des Gemisches setzt sich zum einen aus dem Reaktionspartner Wasser zusammen, zum anderen können weitere organische Lösemittel vorhanden sein.

Der Vorteil bei der Verwendung überwiegend organischer Lösemittel insbesondere bei Schritt (e) liegt in der sehr guten Löslichkeit vieler Silane insbesondere α-Silane, in organischen Lösemitteln. Dadurch können neben hydrophilen Silanen insbesondere auch hydrophobe Silane zur Oberflächenmodifizierung verwendet werden. In wäßrigen Lösungen hingegen sind viele Silane nicht löslich. Man behilft sich hier mit einer kontrollierten Vorhydrolyse der Silane [US 5,759,255] oder der Synthese von speziellen wasserlöslichen Oligomersystemen [DE 196 39 783]. Vorhydrolysierte Silansysteme sind jedoch nicht sehr lagerungsfähig. Durch weitere Hydrolyse oder Kondensationsprozesse können die Silane weiter vernetzen, oligomerisieren und schließlich für den Zweck der Oberflächenmodifizierung unbrauchbar werden. Wasserlösliche Oligomersysteme schließlich müssen erst aufwendig synthetisiert werden, sind ebenfalls schwieriger zu lagern und sind in der Vielfalt der Variationsmöglichkeiten der organofunktionellen Gruppen beschränkt. Mit dem erfindungsgemäßen Verfahren ist ein effektiver Materialeinsatz der relativ teuren Silane möglich.

Aminosilane hingegen sind zwar i.d.R. in Wasser löslich, werden jedoch autokatalytisch hydrolysiert und kondensieren zu oligomeren und polymeren Systemen. Sie besitzen daher in Wasser eine nur eingeschränkte Lagerungsstabilität.

Durch die größere Anzahl als Obeflächenmodifizierungsmittel zur Verfügung stehender Silane kann man die Oberflächeneigenschaften der erfindungsgemäßen Perlglanzpigmente in variabler Weise an die verschiedenen Lacksysteme anpassen.

Die Schritte (a) bis (e) des beschriebenen Verfahrens werden vorzugsweise im gleichen Flüssigmedium durchgeführt. Bei dieser Ausführungsform werden für Schritt (c) in überwiegend organischem Lösemittel hinreichend lösliche Cersalze verwendet. Bevorzugte Beispiele hierfür sind Cer(III)acetat, Cer(III)octoat, Cer(III)acetylacetonat, Cer(III)nitrat oder Cer(III)chlorid oder Cer(IV)ammoniumnitrat.

Die hier beschriebene bevorzugte Variante des erfindungsgemäßen Verfahrens zeichnet sich durch ein Eintopfverfahren aus, bei dem die organisch-chemische Nachbeschichtung unmittelbar im Anschluss an die Beschichtung mit Ceroxid/- hydroxid und nachfolgend SiO₂ erfolgt. Die Silane werden dabei direkt, d.h. ohne Vorhydrolyse zur Reaktionslösung zugegeben, hydrolysieren in situ und kondensieren schließlich mit Hydroxylgruppen der SiO₂-Schicht, so daß eine kovalente Anbindung an der Pigmentoberfläche erfolgt. Dadurch ist eine äußerst einfache Prozeßführung bei gleichzeitig sehr guter Auswahl an verwendbaren Silanen gegeben.

Bei einer weiteren Variante des erfindungsgemäßen Verfahrens kann nach Aufbringung der Ceroxid-und/oder Ceroxid-Hydrat-und/oder Cerhydroxid-Beschichtung aus wässriger Lösung die SiO₂-Beschichtung auch in wässrigem Milieu aus Silikatlösungen erfolgen. Die Bedingungen zur Abscheidung von Cer- oder Silikatverbindungen aus wässriger Lösung werden beispielsweise in Beispiel 2, Zeilen 30-37 der EP 0141174 bzw. in Beispiel 1 der EP 649886 B1 sowie in Beispiel 1 der DE 4207723 bzw. in Beispiel 1 der DE 2106613 beschrieben, die hiermit unter Bezugnahme aufgenommen werden. Anschließend kann gegebenenfalls ein Kalzinierungsschritt durchgeführt werden. Die hierzu notwendigen Bedingungen sind dem Fachmann an sich bekannt und können beispielsweise der DE 2106613 oder der DE 3535818 entnommen werden.

Ein weitere Variante des erfindungsgemäßen Verfahrens zur Herstellung der erfindungsgemäßen Pigmente mit einer weiteren Metalloxidschicht auf dem Substrat besteht darin, daß diese Schicht bereits im Herstellungsprozeß des Substrates aufgebracht und anschließend ggfs. kalciniert wird. Die Details dazu sind dem Fachmann bekannt und können z.B der DE 2106613 oder der DE 3535818 entnommen werden.

Ein weiteres Verfahren zur Herstellung der erfindungsgemäßen Pigmente mit einer weiteren Metalloxidschicht zwischen der Schicht aus Ceroxid und/oder Cerhydroxid und der SiO₂-Schicht besteht in der Fällung dieser Metalloxidschicht nach der Aufbringung der Ceroxid-/Cerhydroxidschicht. Diese Metalloxidschichtfällung kann entweder in überwiegend organischem Lösemittelgemisch oder in wäßriger Lösung erfolgen.

Die erfindungsgemäßen Perlglanzpigmente werden vorzugsweise in Lacken, Pulverlacken, Druckfarben, Kunststoffen und Coatings verwendet.

Insbesondere finden die erfindungsgemäßen beschichteten Perlglanzpigmente Verwendung als wetterechte Perlglanzpigmente in Automobillacken sowie in Pulverlacken und Coatings für Außenanwendungen.

Die folgenden Beispiele sollen die Erfindung näher erläutern, ohne sie jedoch einzuschränken.

### Beispiele

### Beispiel 1:

100g kommerziell erhältliches, blaues Perlglanzpigment auf Basis von TiO₂ beschichtetem Glimmer der Feinheit (Pigmentdurchmesser) 10 - 40 µm (PHOENIX PX 1261, Fa. Eckart) wurden in 300 ml Ethanol suspendiert und auf Siedetemperatur gebracht. Unter Rühren gab man zunächst 20 g Wasser und anschließend innerhalb einer Stunde eine Lösung aus 2,2 g Ce(NO₃)₃ x 6H₂O in 10 g Wasser hinzu. Anschließend wurde eine Lösung von 2,0 g Ammoniak (25 Gew.-%) in 8,0 g Wasser hinzugegeben. Danach leitete man über einen Zeitraum von 2 h 10,6 g Tetraethoxysilan und 25 g Ethanol mit einer Dosierpumpe (Ismatec) kontinuierlich ein. Anschließend ließ man die

Suspension noch 6 h lang weiter reagieren. Dann gab man 0,6 g Geniosil XL 926 und 0,4 g Dynasylan AMEO hinzu und ließ langsam abkühlen. Das Gemisch wurde über Nacht bei Raumtemperatur gerührt und der Feststoff am nächsten Tag abfiltriert. Der Pigmentfilterkuchen wurde anschließend bei 80°C über Nacht unter Vakuum getrocknet.
Das Produkt hatte einen theoretischen Cer-Gehalt von 0,7 Gew.-% und einen SiO₂- Gehalt von 3,0 Gew.-%.

### Beispiel 2:

wie Bsp. 1, jedoch unter Verwendung von 100 g eines silberweißen Perlglanzpigments der Feinheit 10 - 40 µm (PHOENIX PX 1001, Fa. Eckart).

### Beispiel 3:

wie Bsp. 1, jedoch unter Verwendung von 0,6 g Geniosil XL 924 anstelle von Geniosil XL 926.

### Beispiel 4:

wie Beispiel 2, jedoch unter Verwendung von 0,6 g Geniosil XL 924 anstelle von Geniosil XL 926.

### Beispiel 5:

100g kommerziell erhältliches, blaues Perlglanzpigment auf Basis von TiO₂ beschichtetem Glimmer der Feinheit 10 - 40 µm (PHOENIX PX 1261, Fa. Eckart) wurde in 900 g Wasser suspendiert. Anschließend wurde eine Lösung von 2,30 g SnCl₄ x 5H₂O in 45 ml verdünnter Salzsäure mit einer Geschwindigkeit von 2 ml/min zudosiert, wobei der pH-Wert durch gleichzeitiges Zutropfen von 20%iger Natronlauge konstant gehalten wurde. Nach 30 min Nachrühren wurde der Feststoff abfiltriert, mit Wasser gewaschen und bei 120 °C getrocknet.

Das trockene, beschichtete Pigment wurde in 300 ml Ethanol suspendiert und auf Siedetemperatur gebracht. Unter Rühren gab man zunächst 20 g Wasser und anschließend innerhalb einer Stunde eine Lösung aus 2,2 g Ce(NO₃)₃ x 6H₂O in 10 g Wasser hinzu. Anschließend wurde eine Lösung von 2,0 g Ammoniak (25 Gew.-%) in 8,0 g Wasser hinzugegeben. Danach leitete man über einen Zeitraum von 2 h 10,6 g Tetraethoxysilan und 25 g Ethanol mit einer Dosierpumpe (Ismatec) kontinuierlich ein. Anschließend ließ man die Suspension noch 6 h lang weiter reagieren. Dann gab man 0,6 g Geniosil XL 926 und 0,4 g Dynasylan AMEO hinzu und ließ langsam abkühlen. Das Gemisch wurde über Nacht bei Raumtemperatur gerührt und der Feststoff am nächsten Tag abfiltriert. Der Pigmentfilterkuchen wurde anschließend bei 80°C über Nacht unter Vakuum getrocknet.
Das Pigment hatte einen theoretischen SnO₂-Gehalt von 1,0 %, einen Cer-Gehalt von 0,7 und einen SiO₂- Gehalt von 4,2 Gew.-%.

### Vergleichsbeispiel 1:

Kommerziell erhältliches Exterior CFS Mearlin Super Blue 6303Z (10 - 40 µm) der Fa. Engelhard, Iselin, New Jersey.

### Vergleichsbeispiel 2:

Kommerziell erhältliches Iriodin 9225 SW (10 - 40 µm) der Fa. Merck, Darmstadt.

### Vergleichsbeispiel 3:

Kommerziell erhältliches Exterior CFS Mearlin Bright Silver 1303Z (10 - 40 µm) der Fa. Engelhard, Iselin, New Jersey.

### Vergleichsbeispiel 4:

Kommerziell erhältliches Iriodin 9103 SW (10 - 40 µm) der Fa. Merck, Darmstadt.

### Vergleichsbeispiel 5:

wie Bsp. 1, jedoch wurde kein α-Silan zugesetzt. Als Reagenz zur Oberflächenmodifizierung wurde lediglich 0,4 g Dynasylan AMEO zugesetzt.

Die Pigmente der erfindungsgemäßen Beispiele und die Vergleichsbeispiele wurden verschiedenen Tests zur Wetterstabilität und zur UV-Stabilität unterzogen. Nachfolgend sind die Testmethoden beschrieben und die Ergebnisse aufgeführt.

### A Schwitzwassertest

Einige Pigmentproben wurden in ein Wasserlacksystem eingearbeitet und die Prüfapplikationen durch Spritzlackierung hergestellt. Der Basislack wurde mit einem handelsüblichen 1 K-Klarlack überlackiert und anschließend eingebrannt.

Diese Applikationen wurden nach DIN 50 017 (Kondenswasser-Konstantklimate) geprüft. Die Haftfestigkeit wurde mittels Gitterschnitt nach DIN EN ISO 2409 sofort nach Testende und eine Stunde später im Vergleich zur unbelasteten Probe geprüft. Hierbei bedeutet Gt 0 keine Veränderung und Gt 5 eine sehr starke Veränderung.

Das Quellverhalten wurde unmittelbar nach Schwitzwasserbelastung in Anlehnung an die DIN 53230 visuell beurteilt. Hierbei bedeutet die Kennzahl 0: keine Veränderung und die Kennzahl 5: sehr starke Veränderung.

Der Blasengrad wurde visuell nach DIN 53209 beurteilt. Auch hier reicht die relative Bewertungsskala von 0 ("sehr gut") bis 5 ("sehr schlecht"). Mit "m" bezeichnet man die Häufigkeit und mit "g" die Größe der Blasen.

Schließlich wurde der DOI (distinctness of image) visuell nach DIN 53209 beurteilt. Er kann sich im Wesentlichen aufgrund der Quellvorgänge durch Wassereinlagerung verändern.

**Tab. 1: Schwitzwasser und Gitterschnittprüfungen**

| **Probe** | **Gitterschnitt** | | | **Blasengrad** | **Quellung** | **DOI** | |
|---|---|---|---|---|---|---|---|
| | 0-Muster | 0 h | 1 h | | | 0 h | 1 h |
| Beispiel 1 | 0 | 0 | 0 | m1/g1 | 0 | 0 | 0 |
| Beispiel 2 | 0 | 0 | 0 | m1/g1 | 0 | 0 | 0 |
| Beispiel 3 | 0 | 0-1 | 0 | m1/g1 | 0 | 0 | 0 |
| Beispiel 4 | 0 | 0 | 0 | m1/g1 | 1 | 0 | 0 |
| Beispiel 5 | 0 | 0-1 | 0 | m1/g1 | 1 | 1 | 0 |
| Vergl. Beispiel 1 | 0 | 0 | 0 | m2/g1 | 1-2 | 0 | 0 |
| Vergl. Beispiel 2 | 0 | 0 | 0 | m3/g1 | 2 | 1 | 0 |
| Vergl. Beispiel 3 | 0 | 1 | 0 | M1/g1 | 2 | 2 | 0 |
| Vergl. Beispiel 4 | 0 | 0 | 0 | m3/g1 | 2 | 1 | 0 |
| Vergl. Beispiel 5 | 0 | 0 | 0 | m3/g1 | 3 | 3 | 2 |

Wie die Resultate zeigen, sind die Pigmente der erfindungsgemäßen Beispiele 1 bis 5 mit denen der Vergleichsbeispiele 1-5 aus dem Stand der Technik im Hinblick auf den Schwitzwassertest vergleichbar und bestehen diesen ebenfalls ausgezeichnet. Im Unterschied zu den Pigmenten der Vergleichsbeispiele sind der Blasengrad und die Quellung geringer und der DOI besser als im Stand der Technik. Eine Nachbeschichtung, die nur aus einem funktionellen Aminosilan wie AMEO besteht, weist nach Schwitzwasserbelastung hingegen deutliche Nachteile in den Aspekten Quellung, Blasengrad und Abbildungsschärfe auf.

### B WOM-Test

Die Pigmentproben wurden in ein Wasserlacksystem eingearbeitet und die Prüfapplikationen durch Spritzlackierung hergestellt. Der Basislack wurde mit einem handelsüblichen Klarlack überlackiert und anschließend eingebrannt. Die beschleunigte Bewitterungsprüfung erfolgte nach SAE-J 1960 in einem Atlas Ci-65 A Xeno-Testgerät mit wassergekühltem 6.5 kW Xenonstrahler. Die Bestimmung der ΔE*-Werte sowie die Einstufung nach der Grauskala erfolgten jeweils relativ zur entsprechenden unbelasteten Probe.

### C UV-Beständigkeit an Rakelabzügen

Dieser Test wurde in Anlehnung an den in der EP 0 870 730 beschrieben UV-Schnelltest zur Bestimmung der photochemischen UV-Aktivität von TiO₂-Pigmenten durchgeführt.

Hierzu wurden 1.0 g des Perlglanzpigmentes in 9.0 g eines doppelbindungsreichen melaminhaltigen Lackes eindispergiert. Es wurden Rakelabzüge auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m²/nm) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab.2 dargestellt.

Im Test wird im Wesentlichen eine graublaue Verfärbung der TiO₂-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das TiO₂ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser(dampf) und Sauerstoff an die Pigmentoberfläche deutlich verlangsamt, findet eine Reoxidation der Titan(III)-Zentren deutlich verzögert statt, so dass die Vergrauung gemessen und der ΔE-Wert als Maß für die Lichtstabilität der Pigmente herangezogen werden kann. Ein größerer ΔE*-Zahlenwert der belasteten Probe relativ zum unbelasteten Rückstellmuster bedeutet somit eine geringere Lichtstabilität des untersuchten Pigments.

Die Ergebnisse des WOM-Tests sowie des UV-Rakeltests mit den Pigmenten der erfindungsgemäßen Beispiele sowie der Vergleichsbeispiele sind in Tabelle 2 zusammengefaßt.

**Tabelle 2: WOM- und UV-Rakeltestergebnisse**

| | **WOM-Test** | | **UV-Test** | |
|---|---|---|---|---|
| **Probe** | **ΔE*** | **Grauskala** | **ΔE*** **(ohne OFM)** | **ΔE*** **(mit OFM)** |
| **Beispiel 1** | | | 1,1 | 1,2 |
| 500h | 0,1 | 5 | | |
| 1000h | 0,2 | 5 | | |
| 2000h | 0,2 | 5 | | |
| 3000h | 0,3 | 5 | | |
| 4000h | 0,3 | 4 - 5 | | |
| **Beispiel 2** | | | 0,7 | 0,8 |
| 500h | 0,2 | 5 | | |
| 1000h | 0,2 | 5 | | |
| 2000h | 0,2 | 5 | | |
| 3000h | 0,2 | 5 | | |
| 4000h | 0,2 | 5 | | |
| **Beispiel 3** | | | 1,3 | 1,1 |
| 500h | 0,1 | 5 | | |
| 1000h | 0,2 | 5 | | |
| 2000h | 0,2 | 5 | | |
| 3000h | 0,3 | 5 | | |
| 4000h | 0,3 | 4 - 5 | | |
| **Beispiel 4** | | | 0,9 | 0,8 |
| 500h | 0,2 | 5 | | |
| 1000h | 0,2 | 5 | | |
| 2000h | 0,2 | 5 | | |
| 3000h | 0,2 | 5 | | |
| 4000h | 0,2 | 5 | | |
| **Vergleichsbeispiel 1** (Exterior CFS Mearlin Super Blue 6303Z) | | | - | 2,3 +/- 0,3 |
| 500h | 0,4 | 5 | | |
| 1000h | 0,5 | 5 | | |
| 2000h | 0,8 | 4 - 5 | | |
| 3000h | 0,8 | 4 - 5 | | |
| 4000h | 1,0 | 4 | | |
| **Vergleichsbeispiel 2** | | | - | 12,1 |
| **Vergleichsbeispiel 3** | | | | 2,1 |
| **Vergielchsbeispiel 4** | | | | 8,5 |

| | | | | |
|---|---|---|---|---|
| OFM: Oberflächenmodifizierung | | | | |

Vergleicht man die Farbänderungen ΔE* des WOM-Testes der blauen Pigmente der erfindungsgemäßen Beispiele 1 bis 4 mit jenem den Stand der Technik repräsentierenden Vergleichsbeispielen (Tab. 2), so erhält man niedrigere Werte und daher bessere Wetterbeständigkeiten. Zudem werden geringere Vergrauungsgrade bei den erfindungsgemäßen Beispielen beobachtet. Vor allem die UV-Lichtbeständigkeiten, die anhand des Rakeltestes ermittelt werden, sind deutlich besser.

Die erfindungsgemäßen Perlglanzpigmente vermögen daher die Wetter- und UV-Stabilität mit einer optimalen Schichtfolge von zuerst Ceroxid/-hydroxid und anschließend SiO₂ sowie organisch-chemischer Nachbeschichtung mit α-Silan gegenüber den Pigmenten der Vergleichsbeispiele aus dem Stand der Technik zu verbessern.

### UV-Beständigkeit:

Zur näheren Untersuchung des Aufbaus der Oxidschicht und des Einflusses der SiO₂-Schichtdicke wurden weitere erfindungsgemäße Beispiele und Vergleichsbeispiele hergestellt und im Rakeltest hinsichtlich ihrer UV-Beständigkeit untersucht. Auf eine organisch-chemische Nachbeschichtung wurde hier verzichtet, um nur die Wirkweise der oxidischen Schutzschichten zu untersuchen.

### Beispiele 6 und 7:

100g kommerziell erhältliches, blaues Perlglanzpigment auf Basis von TiO₂ beschichtetem Glimmer der Feinheit 10 - 40 µm (PHOENIX PX 1261, Fa Eckart) wurden in 300 ml Isopropanol suspendiert und auf Siedetemperatur gebracht. Unter Rühren gab man zunächst 2,0 g H₂O und anschließend innerhalb einer Stunde eine Lösung aus 0,93 g Ce(NO₃)₃ x 6 H₂O in 8 g Isopropanol hinzu. Anschließend wurde eine Lösung von 0,45 g Ethylendiamin in 3,0 g H₂O hinzugegeben. Danach leitete man über einen Zeitraum von 2h eine bestimmte Menge Tetraethoxysilan (s. Tabelle 3) und 22 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der

Pigmentfilterkuchen wurde anschließend 6 h lang bei 100°C unter Vakuum getrocknet.
In analoger Weise wurden verschiedene Mengen SiO₂ abgeschieden (siehe Tabelle 3).

### Vergleichsbeispiele 6 und 7:

Zum Vergleich wurden auch verschiedene Schutzschichten mit variierendem SiO₂-Gehalt hergestellt, ohne dass zusätzlich Cersalze abgeschieden wurden.

### Vergleichsbeispiel 8:

Ebenfalls wurde ein Vergleichsbeispiel mit cerhaltiger Schutzschicht (0,3% Ce-Gehalt), ohne dass zusätzlich SiO₂ abgeschieden wurde, hergestellt.

### Vergleichsbeispiel 9 und 10 (Mischschicht):

100g kommerziell erhältliches, blaues Perlglanzpigment auf Basis von TiO₂ beschichtetem Glimmer der Feinheit 10-40 µm (PHOENIX PX 1261, Fa. Eckart) wurden in 300 ml Isopropanol suspendiert und auf Siedetemperatur gebracht. Unter Rühren gab man zunächst 2,0 g H₂O und anschließend eine Lösung von 0,45 g Ethylendiamin in 3,0 g H₂O zu. Danach leitete man über einen Zeitraum von 2h gleichzeitig eine Lösung von Tetraethoxysilan (siehe Tabelle 3) in 100 g Isopropanol und eine Lösung 0,93 g Ce(NO₃)₃ x 6 H₂O in 100 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend bei 80°C unter Vakuum getrocknet.
In analoger Weise wurden verschiedene Mengen SiO₂ abgeschieden (siehe Tabelle 3).

### Vergleichsbeispiele 11 und 12:

Die Vergleichsbeispiele 11 und 12 wurden in Anlehnung an die für Bsp. 6 und 7 beschriebene Beschichtungsmethode dargestellt, wobei hier zunächst die Silikatverbindung und dann das Cersalz eingeleitet und gefällt wurde.

Von allen Beispielen wurden die ΔE*-Werte des oben beschriebenen UV-Beständigkeitstests an Rakelabzügen bestimmt. Die eingesetzten Chemikalienmengen, theoretische Schutzschichtkomponentengehalte und die ΔE*-Werte sind in Tabelle 3 dargestellt.

**Tabelle 3: UV- Rakeltestergebnisse**

| **Probe** | **Schicht 1** | **Schicht 2** | **Verwendete Menge Tetraethoxysilan** | **ΔE*** |
|---|---|---|---|---|
| Beispiel 6 | 0,3 % Ce | 1 % SiO₂ | 3,47 g | 1,5 |
| Beispiel 7 | 0,3 % Ce | 2 % SiO₂ | 6,94 g | 1,0 |
| Vergleichs-beispiel 6 | ---- | 1 % SiO₂ | 3,47 g | 5,8 |
| Vergleichs-beispiel 7 | ---- | 2 % SiO₂ | 6,94 g | 3,1 |
| Vergleichs-beispiel 8 | 0,3 % Ce | ---- | ---- | 8,4 |
| Vergleichs-beispiel 9 | 0,3 % Ce / 1 % SiO₂ | - | 3,47 g | 3,1 |
| Vergleichs-beispiel 10 | 0,3 % Ce / 2 % SiO₂ | - | 6,94 g | 2,3 |
| Vergleichs-beispiel 11 | 1 % SiO₂ | 0,3 % Ce | 3,47 g | 6,0 |
| Vergleichs-beispiel 12 | 2 % SiO₂ | 0,3 % Ce | 6,94 g | 3,3 |

Tab. 3 ist klar zu entnehmen, dass eine Schichtfolge aus 1. Ceroxid und/oder Ceroxid-Hydrat und/oder Cerhydroxid und 2. SiO₂ die beste UV-Beständigkeit bringt. Nur mit SiO₂ sowie nur mit Ceroxid und/oder Ceroxid-Hydrat und/oder Cerhydroxid geschützte Perlglanzpigmente oder die Schichtenfolge 1. SiO₂, 2. Ceroxid und/oder Ceroxid-Hydrat und/oder Cerhydroxid haben vergleichsweise deutlich niedrigere Beständigkeiten. Ebenso weisen Mischschichten aus SiO₂ und Ceroxid und/oder Ceroxid-Hydrat und/oder Cerhydroxid eine geringere stabilisierende Wirkung auf. Diese Befunde sind ein deutlicher Hinweis auf die synergetischen Effekte einer kombinierten, nacheinander gefällten Cerhydroxid- und SiO₂-Beschichtung, die nur dann wirksam werden, wenn zunächst die Ceroxid-und/oder Ceroxid-Hydrat-und/oder Cerhydroxid-und erst anschließend die Siliziumoxidschicht gefällt wird.

Nachfolgend wurden die Glanzeigenschaften von gemäß Beispiel 1 und 2 mit einer Ceroxid-Schicht und einer SiO₂-Schicht beschichteten PHOENIX PX 1261 bzw. PHOENIX PX 1001 Perlglanzpigmenten mit nicht-nachbeschichteten PHOENIX PX 1261 bzw. PX 1001 Perlglanzpigmenten verglichen.

Hierzu wurden die Perlglanzpigmente mit einer Schicht aus Ceroxid und einer Schicht aus SiO₂ (siehe Beispiel 1 und 2) bzw. ohne organisch-chemische Nachbeschichtung in ein handelsübliches NC-Lacksystem in einer Pigmentierungshöhe von 6 Gew.-%, bezogen auf das Gesamtgewicht des Lackes, eingearbeitet. Von den pigmentierten NC-Lacksystemen wurden Rakelabzüge mit einer Naßfilmdicke von 36 µm angefertigt. Die Rakelabzüge wurden dabei auf Prüfkarten mit schwarzer und weißer Fläche, erhältlich bei der Fa. BYK-Gardner, Deutschland, aufgebracht und für 30 min Minuten bei 25 °C getrocknet.

Die Glanzmessungen wurden mit einem micro-TRI-Gloss µ - Gerät der Fa. BYK-Gardner gemäß Herstellerangaben bei einer Meßgeometrie von 60°, bezogen auf Vertikale, durchgeführt. Eine Meßgeometrie von 60° ist für den sogenannten "Mittelglanz" im Bereich von 10 bis 70 Glanzpunkten geeignet, wobei ein höherer Zahlwert bei den Glanzpunkten bei einem höheren Glanz gemessen wird. Die Meßergebnisse sind in Tabelle 4 angegeben.

**Tabelle 4: Glanzwerte von PHOENIX PX 1261 mit (Beispiel 1) und ohne SiO₂-Beschichtung**

| **Probe** | **60°-Glanz auf weißem Untergrund** | **60°-Glanz auf schwarzem Untergrund** |
|---|---|---|
| PHOENIX PX 1261 mit Ceroxid und SiO₂-Beschichtung (Bsp. 1) | 36,7 (0,3) | 33,6 (0,2) |
| PHOENIX PX 1261 ohne Nachbeschichtung | 34,7 (0,1) | 31,4 (0,5) |

**Tabelle 5: Glanzwerte von PHOENIX PX 1001 mit (Beispiel 2) und ohne SiO₂-Beschichtung**

| **Probe** | **60°-Glanz auf weißem Untergrund** | **60°-Glanz auf schwarzem Untergrund** |
|---|---|---|
| PHOENIX PX 1001 mit Ceroxid und SiO₂-Beschichtung (Bsp. 2) | 63,9 (0,2) | 60,8 (0,2) |
| PHOENIX PX 1001 ohne Nachbeschichtung | 60,2 (0,2) | 57,5 (0,3) |

Den Tabellen 4 und 5 ist zu entnehmen, dass die Beschichtung von Perlglanzpigmenten mit einer Schicht aus Ceroxid und einer Schicht aus SiO₂, das einen niedrigen Brechungsindex aufweist, überraschenderweise zu einem besseren Glanz als die Perlglanzpigmente ohne Schutzdeckschicht führt. Im Hinblick auf den niedrigen Brechungsindex von SiO₂ wäre zu erwarten gewesen, dass die mit SiO₂ beschichteten Perlglanzpigmente deutlich geringere Glanzeigenschaften aufweisen.

## Patentansprüche

1. Perlglanzpigment mit Metalloxid-haltigem, plättchenförmigen Substrat und mit einer ersten und einer zweiten Schutzschicht, wobei das Metalloxid einen Brechungsindex von größer als 1,8 hat,
**dadurch gekennzeichnet,**
**dass**
a) die erste Schutzschicht Ceroxid und/oder Ceroxid-Hydrat und/oder Cerhydroxid umfaßt,
b) die zweite Schutzschicht im Wesentlichen, vorzugsweise vollständig, aus SiO₂ besteht,
wobei die zweite Schutzschicht nach der ersten Schutzschicht angeordnet ist und zwischen der ersten und der zweiten Schutzschicht Metalloxidschichten, die verschieden von Ceroxid und/oder Ceroxid-Hydrat und/oder Cerhydroxid und SiO₂ sind, angeordnet sein können, wobei
c) die zweite Schutzschicht eine organisch-chemische Nachbeschichtung aufweist und die organisch-chemische Nachbeschichtung wenigstens ein über wenigstens ein Sauerstoffatom an der zweiten Schutzschicht gebundenes α-Silan mit der Formel (I)
-O₍₄₋ₙ₋ₘ₎-Si(-R¹)ₘ(-CH₂-Y)ₙ (I)
umfasst, wobei 1 ≤ n+m ≤ 3; m = 0 - 2; n = 1 - 3 ist und
R¹ ein Wasserstoffatom oder ein Si-C gebundener C₁-C₂₀-Kohlenwasserstoffrest oder ein C₁-C₁₅-Kohlenwasserstoffoxyrest, in den jeweils eine oder mehrere, einander nicht benachbarte Methyleneinheiten durch Gruppen -O-, -CO-, -COO-, -OCO-, oder -OCOO-, -S-, oder -NR^{x}-ersetzt sein können und in denen eine oder mehrere, einander nicht benachbarte Methineinheiten durch Gruppen, -N=, -N=N-, oder -P= ersetzt sein können, wobei R¹ unabhängig voneinander gleich oder verschieden sein kann,
R^{x} ein Wasserstoffatom oder linearer, verzweigter und/oder cyclischer C₁-C₁₅-Kohlenwasserstoff- oder Arylrest sein kann, und
Y eine mit einem Bindemittelsystem reaktive funktionelle Bindungsgruppe ist,
wobei die organisch-chemische Nachbeschichtung kein Silan ohne funktionelle Bindungsgruppen aufweist.

2. Perlglanzpigment nach Anspruch 1,
**dadurch gekennzeichnet,**
**dass** der Si-C gebundene C₁-C₂₀-Kohlenwasserstoffrest R¹ mit wenigstens einer mit einem Bindemittelsystem reaktiven funktionellen Bindungsgruppe substituiert ist, wobei die reaktive funktionelle Bindungsgruppe aus der Gruppe die aus -CN, -NCO, -NR^{x}₂, -COOH, -COOR^{x}, -Acryl, -Methacryl,-Epoxy, Epoxycyclohexyl, Ureido, -SH, -OH, -CONR^{x}₂ und Mischungen davon besteht, ausgewählt wird.

3. Perlglanzpigment nach einem der vorherigen Ansprüche,
**dadurch gekennzeichnet,**
**dass** die mit einem Bindemittelsystem reaktive funktionelle Bindungsgruppe Y aus der Gruppe, bestehend aus
- CN, -NCO, -NR^{x}₂, -CHNR^{x}₂ - CH₂-NR^{x}, Morpholino, -COOH, -COOR^{x}, -OC(O)C(R) =CH₂, -Epoxy, bevorzugt Glycidoxy, Epoxycyclohexyl,
Ureido, -C(O)-NH-C(O)-NR^{x}₂, -SH, -OH und Mischungen davon, ausgewählt wird.

4. Perlglanzpigment nach Anspruch 2 oder 3,
**dadurch gekennzeichnet,**
**dass** R^{x} aus der Gruppe, bestehend aus Wasserstoffatom, linearer, verzweigter und/oder cyclischer C₁-C₁₅-Kohlenwasserstoff- oder Arylrest,
wobei R^{x} unabhängig voneinander gleich oder verschieden sein kann, ausgewählt wird.

5. Perlglanzpigment nach einem der vorherigen Ansprüche,
**dadurch gekennzeichnet,**
**dass** n = 1 und m = 1 ist.

6. Perlglanzpigment nach einem der vorherigen Ansprüche,
**dadurch gekennzeichnet,**
**dass** der Rest R¹ ein unsubstituierter C₁-C₃-Kohlenwasserstoffrest, bevorzugt eine Methylgruppe, ist.

7. Perlglanzpigment nach einem der Ansprüche 1 bis 4,
**dadurch gekennzeichnet,**
**dass** n = 1 und m = 0 ist.

8. Perlglanzpigment nach einem der Ansprüche 1 bis 6,
**dadurch gekennzeichnet,**
**dass** die organisch-chemische Nachbeschichtung ein oder mehrere α-Silane mit der Formel
-O₍₄₋ₙ₋ₘ₎-SiR¹ₘ(-CH₂-Y)ₙ
aufweist oder daraus besteht.

9. Perlglanzpigment nach einem der vorherigen Ansprüche,
**dadurch gekennzeichnet,**
**dass** die organisch-chemische Nachbeschichtung zusätzlich wenigstens ein γ-Silan mit der Formel (II)
-O-₍₄₋ₙ₋ₘ₎Si(-R²)ₘ(-CH₂-CH₂-CH₂-Y)ₙ (II)
umfasst, wobei 1 ≤ n+m ≤ 3; m = 0 - 2; n = 1 - 3 ist und
R² ein Wasserstoffatom oder ein Si-C gebundener C₁-C₂₀-Kohlenwasserstoffrest oder C₁-C₁₅-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder -NR^{x}-ersetzt sein können und in denen eine oder mehrere, einander nicht benachbarte Methineinheiten durch Gruppen, -N=, -N=N-, oder -P= ersetzt sein können, wobei R² unabhängig voneinander gleich oder verschieden sein kann,
R^{x} ein Wasserstoffatom oder linearer, verzweigter und/oder cyclischer C₁-C₁₅-Kohlenwasserstoff- oder Arylrest, wobei R^{x} gleich oder verschieden sein kann, und
Y eine mit einem Bindemittelsystem reaktive funktionelle Bindungsgruppe ist.

10. Perlglanzpigment nach Anspruch 9,
**dadurch gekennzeichnet,**
**dass** der Si-C gebundene C₁-C₂₀-Kohlenwasserstoffrest R² mit wenigstens einer mit einem Bindemittelsystem reaktiven funktionellen Bindungsgruppe substituiert ist, wobei die reaktive funktionelle Bindungsgruppe aus der Gruppe, die aus -CN, -NCO, -NR^{x}₂, -COOH, -COOR^{x}, -Acryl, -Methacryl, -Epoxy, -SH, -OH, Ureido, -CONR^{x}₂ und Mischungen davon besteht, ausgewählt wird.

11. Perlglanzpigment nach Anspruch 9 oder 10,
**dadurch gekennzeichnet,**
**dass** die mit einem Bindemittelsystem reaktive funktionelle Bindungsgruppe Y aus der Gruppe, die aus Acrylat-, Methacrylat-, Vinyl-, Amino-, γ-(2-Aminoethyl)amino-, Cyanat-, Isocyanat-, Epoxy-, Hydroxy-Thiol-, Ureido-, Carboxylgruppen und Mischungen davon besteht, ausgewählt wird.

12. Perlglanzpigment nach einem der Ansprüche 1 bis 11,
**dadurch gekennzeichnet,**
**dass** die organisch-chemische Nachbeschichtung ein oder mehrere α-Silanen mit der Formel
-O₍₄₋ₙ₋ₘ₎-Si(-R¹)ₘ(-CH₂-Y)ₙ
und ein oder mehrere γ-Silane mit der Formel
-O-₍₄₋ₙ₋ₘ₎Si(-R²)ₘ(-CH₂-CH₂-CH₂-Y)ₙ
aufweist oder daraus besteht.

13. Perlglanzpigment nach Anspruch 1,
**dadurch gekennzeichnet,**
**dass** die organisch-chemische Nachbeschichtung kein Alkylsilan aufweist.

14. Perlglanzpigment nach einem der vorherigen Ansprüche,
**dadurch gekennzeichnet,**
**dass** der Anteil der organisch-chemischen Nachbeschichtung zwischen 0,1 und 6 Gew.-%, vorzugsweise zwischen 0,2 und 5 Gew.-%, bezogen auf das Gesamtgewicht des Pigmentes, beträgt.

15. Perlglanzpigment nach einem der vorherigen Ansprüche,
**dadurch gekennzeichnet,**
**dass** die Schutzschicht mit Ceroxid und/oder Ceroxidhydrat und/oder Cerhydroxid ferner SiO₂ enthalten kann.

16. Perlglanzpigment nach einem der vorherigen Ansprüche,
**dadurch gekennzeichnet,**
**dass** zwischen der ersten Schutzschicht mit Ceroxid und/oder Ceroxid-Hydrat und/oder Cerhydroxid und der zweiten im wesentlichen, vorzugsweise vollständig, aus SiO₂ bestehenden Schutzschicht weitere Schichten, vorzugsweise Metalloxidschichten, angeordnet sind.

17. Perlglanzpigment nach einem der vorherigen Ansprüche,
**dadurch gekennzeichnet,**
**dass** das plättchenförmige Substrat eine oder mehrere Metalloxidschichten, vorzugsweise eine oder mehrere Schichten aus Zinnoxid, aufweist, wobei das mit der einen oder mehreren Metalloxidschichten beschichtete plättchenförmige Substrat vorzugsweise calciniert ist.

18. Perlglanzpigment nach einem der Ansprüche 1 bis 14,
**dadurch gekennzeichnet,**
**dass** a) die erste Schutzschicht aus Ceroxid und/oder Ceroxid-Hydrat und/oder Cerhydroxid und
b) die zweite Schutzschicht aus SiO₂
besteht.

19. Perlglanzpigment nach einem der vorherigen Ansprüche,
**dadurch gekennzeichnet,**
**dass** der SiO₂-Gehalt des Pigmentes 0,5 bis 8 Gew.-%, bezogen auf das Gesamtgewicht des Pigmentes, beträgt.

20. Perlglanzpigment nach einem der vorherigen Ansprüche,
**dadurch gekennzeichnet,**
**dass** der Anteil von Cer 0,05 bis 3,0 Gew.%, vorzugsweise 0,1 bis 1,0 Gew.-%, jeweils bezogen auf das Gesamtgewicht des Pigmentes, beträgt.

21. Perlglanzpigment nach einem der vorherigen Ansprüche,
**dadurch gekennzeichnet,**
**dass** das plättchenförmige Substrat aus der Gruppe, die aus TiO₂ und/oder Eisenoxid beschichteten Glimmerplättchen,
TiO₂ und/oder Eisenoxid beschichteten Glasplättchen,
TiO₂ und/oder Eisenoxid beschichteten Aluminiumoxidplättchen, TiO₂ und/oder Eisenoxid beschichteten SiO₂-Plättchen, Bismutoxychloridplättchen,
reinen TiO₂-Plättchen und
Mischungen davon
besteht, ausgewählt wird.

22. Porlglanzpigment nach Anspruch 21,
**dadurch gekennzeichnet,**
**dass** das plättchenförmige Substrat TiO₂ und/oder Eisenoxid beschichtetes Glasplättchen ist, wobei die mittlere Dicke des Glasplättchens geringer als 500 nm, bevorzugt geringer als 350 nm ist.

23. Perlglanzpigment nach einem der vorherigen Ansprüche,
**dadurch gekennzeichnet,**
**dass** das Substrat eine Schicht aus TiO₂ umfaßt oder ist.

24. Verfahren zur Herstellung eines Perlglanzpigmentes nach einem der Ansprüche 1 bis 23, das die folgenden Schritte umfasst:
(a) Suspendieren von Metalloxid-haltigem, plättchenförmigen Substrat in einer Flüssigphase, wobei das Metalloxid einen Brechungsindex von größer als 1,8 hat,
(b) Aufbringen einer Schicht mit Ceroxid und/oder Ceroxid-Hydrat und/oder Cerhydroxid auf das plättchenförmige Substrat,
(c) optionales Aufbringen einer oder mehrerer Metalloxidschichten auf das in Schritt (b) beschichtete Pigment,
(d) Aufbringen einer im wesentlichen, vorzugsweise vollständig, aus SI0₂-bestehenden Schicht auf das in Schritt (b) oder Schritt (c) beschichtete Pigment,
(e) Beschichten des Pigmentes nach Schritt d) mit einer organisch-chemischen Nachbeschichtung umfassend wenigstens ein α-Silan mit der Formel (III)
X₍₄₋ₙ₋ₘ)Si(R¹)ₘ(-CH₂-Y)ₙ, (III)
wobei 1 ≤ n+m ≤ 3; m = 0 - 2; n = 1 - 3 ist und
R¹ ein Wasserstoffatom oder ein Si-C gebundener C₁-C₂₀-Kohlenwasserstoffrest oder ein C₁-C₁₅-Kohlenwasserstoffoxyrest, in den jeweils eine oder mehrere, einander nicht benachbarte Methyleneinheiten durch Gruppen -O-, -CO-, -COO-, -OCO-, oder -OCOO-, -S-, oder -NR^{x}-ersetzt sein können und in denen eine oder mehrere, einander nicht benachbarte Methineinheiten durch Gruppen, -N=, -N=N-, oder P= ersetzt sein können, wobei R¹ unabhängig voneinander gleich oder verschieden sein kann,
R^{x} ein Wasserstoffatom oder linearer, verzweigter und/oder cyclischer C₁-C₁₅-Kohlenwasserstoff- oder Arylrest sein kann und
X eine hydrolysier- und kondensationsfähige Gruppe ist, die aus der Gruppe, die aus Alkoxy, Hydroxy, Acetyloxy, Halogen und Mischungen
davon besteht, ausgewählt wird und
Y eine mit einem Bindemittelsystem reaktive funktionelle Bindungsgruppe ist.

25. Verfahren nach Anspruch 24,
**dadurch gekennzeichnet,**
**dass** in Schritt (a) die Flüssigphase einen überwiegenden Anteil an organischem Lösemittel, das vorzugsweise weniger als 50 Gew.-% Wasser enthält, enthält.

26. Verfahren nach einem der Ansprüche 24 oder 25,
**dadurch gekennzeichnet,**
**dass** in Schritt (b) die Schicht mit Ceroxid und/oder Cerhydroxid unter Verwendung von in organischem Lösemittel löslichen Cerverbindungen, vorzugsweise von Cer(III)acetat, Cer(III)octoat, Cer(III)acetylacetonat, Cer(III)nitrat, Cer(III)chlorid oder Cer(IV)ammoniumnitrat oder Mischungen davon, unter optionaler Zugabe von Wasser aufgebracht wird.

27. Verfahren nach einem der Ansprüche 24 bis 26,
**dadurch gekennzeichnet,**
**dass** in Schritt (e) die organisch-chemischen Nachbeschichtung zusätzlich wenigstens ein γ-Silan mit der Formel (IV)
X₍₄₋ₙ₋ₘ₎Si(-R²)ₘ (-CH₂ - CH₂ - CH₂-Y)ₙ (IV) umfasst, wobei X, R² und Y sind, wie in Anspruch 24 (IV) für das α-Silan angegeben.

28. Verfahren nach einem der Ansprüche 24 bis 27,
**dadurch gekennzeichnet,**
**dass** die Gruppe X Methoxy und/oder Ethoxy ist.

29. Verfahren nach einem der Ansprüche 24 bis 28,
**dadurch gekennzeichnet,**
**dass** in Schritt (d) die SiO₂-Schicht unter Zugabe von Tetraalkoxysilan zu dem in Schritt (b) oder (c) beschichteten Pigment unter optionaler Zugabe von Wasser aufgebracht wird.

30. Verfahren nach Anspruch 29,
**dadurch gekennzeichnet,**
**dass** das Tetraalkoxysilan aus der Gruppe, die aus Tetramethoxysilan, Tetraethoxysilan, Tetraisopropoxysilan, Tetrabutoxysilan und Mischungen davon besteht, ausgewählt wird.

31. Verfahren nach einem der Ansprüche 24 bis 30,
**dadurch gekennzeichnet,**
**dass** in Schritt (d) zusätzlich stickstoffhaltige Basen zugegeben werden.

32. Verfahren nach einem der Ansprüche 24 bis 31,
**dadurch gekennzeichnet,**
**dass** in Schritt (e) die SiO₂-Schicht in einer Flüssigphase mit einem überwiegenden Anteil an organischem Lösemittel organisch-chemisch oberflächenmodifiziert wird.

33. Verfahren nach Anspruch 24,
**dadurch gekennzeichnet,**
**dass** in Schritt (d) die in Schritt (b) oder Schritt (c) beschichteten Pigmente in Wasser oder in überwiegend wässrigem Medium suspendiert werden und die SiO₂-Schicht unter Verwendung von wässrigen Silikatlösungen wie Wasserglas aufgebracht wird.

34. Verfahren nach Anspruch 33,
**dadurch gekennzeichnet,**
**dass** die mit einer SiO₂-Schicht beschichteten Pigmente in einer Flüssigphase mit überwiegende Anteil an organischem Lösemittel aufgenommen und nachfolgend organisch-chemisch oberflächenmodifiziert werden.

35. Verfahren nach einem der vorhergehenden Ansprüche 24 bis 32 oder 34, **dadurch gekennzeichnet,**
**dass** das organische Lösemittel Essigester, Alkohole, wie Methanol, Ethanol, n-Propanol, iso-Propanol, n-Butanol, 2-Methylpropanol, 2-Methoxypropanol, Butylglycol oder Mischungen davon ist.

36. Verfahren nach einem der vorhergehenden Ansprüche 24 bis 35,
**dadurch gekennzeichnet,**
**dass** das wenigstens eine α-Silan mit der Formel
-X₍₄₋ₙ₋ₘ₎Si(-R)ₘ(CH₂-Y)ₙ ein Monomer ist.

37. Verfahren nach einem der vorhergehenden Ansprüche 24 bis 36,
**dadurch gekennzeichnet,**
**dass** das wenigstens eine α-Silan mit der Formel
X₍₄₋ₙ₋ₘ₎Si(-R)ₘ(-CH₂-Y)ₙ ein zu nicht mehr als 50 % vorhydrolysiertes Silan, vorzugsweise ein nichtvorhydrolysiertes Silan, ist.

38. Verfahren nach einem der vorhergehenden Ansprüche 27 bis 35,
**dadurch gekennzeichnet,**
**dass** das wenigstens eine γ-Silan mit der Formel
X₍₄₋ₙ₋ₘ₎Si (-R²)ₘ (-CH₂ - CH₂ - CH₂ -Y)ₙ
ein zu nicht mehr als 50 % vorhydrolysiertes Silan, vorzugsweise ein nichtvorhydrolysiertes Silan, ist.

39. Verwendung eines Petlglanzpfgmentes nach einem der Ansprüche 1 bis 23 in Coatings, Lacken, Pulverlacken, Druckfarben, Kunststoffen und kosmetischen Zubereitungen.

40. Verwendung eines Perlglanzpigmentes nach einem der Ansprüche 1 bis 23 in bewitterungsstabilen Automobillacken sowie Pulverlacken und Coatings für bewitterungsstabile Außen- und Fassadenanwendungen.

## Claims

1. A pearlescent pigment with a metal oxide-containing, platelet-like substrate and with a first and second protective layer, wherein the metal oxide has a refractive index greater than 1.8,
**characterised in that**
a) the first protective layer comprises cerium oxide and/or cerium oxide hydrate and/or cerium hydroxide,
b) the second protective layer consists substantially, preferably entirely, of SiO₂, wherein the second protective layer is arranged after the first protective layer, and between the first and second protective layers, metal oxide layers other than cerium oxide and/or cerium oxide hydrate and/or cerium hydroxide and SiO₂ may be arranged, wherein
c) the second protective layer has an organo-chemical after-coat and the organo-chemical after-coat comprises at least one α-silane bonded to the second protective layer by means of at least one oxygen atom and having the formula (I)
-O₍₄₋ₙ₋ₘ₎-Si(-R¹)ₘ(-CH₂-Y)ₙ (I),
in which 1 ≤ n+m ≤ 3; m = 0 to 2; n = 1 to 3 and R¹ is a hydrogen atom or an Si-C-bonded C₁-C₂₀ hydrocarbon radical or a C₁-C₁₅ hydrocarbon oxy radical, in which in each case one or more methylene units not adjacent to one another can be replaced by groups -O-, -CO-, -COO-, -OCO- or -OCOO-, -S- or -NR^{x}- and in which one or more methine units not adjacent to one another can be replaced by groups -N=, -N=N- or -P=, wherein R¹, independently of one another, can be the same or different,
R^{x} can be a hydrogen atom or a linear, branched and/or cyclic C₁-C₁₅ hydrocarbon radical or aryl radical, and
Y is a functional binding group reactive with a binder system,
wherein the organo-chemical after-coat has no silane without functional binding groups.

2. The pearlescent pigment according to claim 1, **characterised in that**
the Si-C-bonded C₁-C₂₀ hydrocarbon radical R¹ is substituted by at least one functional binding group reactive with a binder system, said reactive functional binding group being selected from the group consisting of -CN, -NCO, -NR^{x}₂, -COOH, -COOR^{x}, -acryloyl, -methacryloyl, -epoxy, epoxycyclohexyl, ureido, -SH, -OH, -CONR^{x}₂ and mixtures thereof.

3. The pearlescent pigment according to one of the preceding claims,
**characterised in that**
the functional binding group Y reactive with a binder system is selected from the group consisting of -CN, -NCO, -NR^{x}₂, -CHNR^{x}₂, -CH₂-NR^{x}, morpholino, -COOH, -COOR^{x}, -OC(O)C(R)=CH₂, -epoxy, preferably glycidoxy, epoxycyclohexyl, ureido, -C(O)-NH-C(O)-NR^{x}₂, -SH, -OH and mixtures thereof.

4. The pearlescent pigment according to claim 2 or 3,
**characterised in that**
R^{x} is selected from the group consisting of a hydrogen atom or a linear, branched and/or cyclic C₁-C₁₅ hydrocarbon or aryl radical, wherein R^{x}, independently of one another, can be the same or different.

5. The pearlescent pigment according to one of the preceding claims,
**characterised in that**
n=1 and m=1.

6. The pearlescent pigment according to one of the preceding claims,
**characterised in that**
the radical R¹ is an unsubstituted C₁-C₃ hydrocarbon radical, preferably a methyl group.

7. The pearlescent pigment according to one of claims 1 to 4,
**characterised in that**
n=1 and m=0.

8. The pearlescent pigment according to one of claims 1 to 6,
**characterised in that**
the organo-chemical after-coat comprises or consists of one or more α-silanes of the formula
-O₍₄₋ₙ₋ₘ₎-SiR¹ₘ(-CH₂-Y)ₙ.

9. The pearlescent pigment according to one of the preceding claims,
**characterised in that**
the organo-chemical after-coat additionally comprises at least one γ-silane of formula (II)
-O₍₄₋ₙ₋ₘ₎Si(-R²)ₘ(-CH₂-CH₂-CH₂-Y)ₙ (II)
in which 1 ≤ n+m ≤ 3; m = 0 to 2; n = 1 to 3 and
R² is a hydrogen atom or an Si-C-bonded C₁-C₂₀ hydrocarbon radical or a C₁-C₁₅ hydrocarbon oxy radical, in which in each case one or more methylene units not adjacent to one another can be replaced by groups -O-, -CO-, -COO-, -OCO-, or -OCOO-, -S- or -NR^{x}-and in which one or more methine units not adjacent to one another can be replaced by groups -N=, -N=N- or -P=, in which R², independently of one another, can be the same or different,
R^{x} is a hydrogen atom or a linear, branched and/or cyclic C₁-C₁₅ hydrocarbon or aryl radical, wherein R^{x} can be the same or different, and
Y is a functional binding group reactive with a binder system.

10. The pearlescent pigment according to claim 9,
**characterised in that**
the Si-C-bonded C₁-C₂₀ hydrocarbon radical R² is substituted by at least one functional binding group reactive with a binder system, said reactive functional binding group being selected from the group consisting of -CN, -NCO, -NR^{x}₂, -COOH, -COOR^{x}, -acryloyl, -methacryloyl, -epoxy, -SH, -OH, ureido, -CONR^{x}₂ and mixtures thereof.

11. The pearlescent pigment according to claim 9 or 10, **characterised in that**
the functional binding group Y reactive with a binder system is selected from the group consisting of acrylate, methacrylate, vinyl, amino, γ-(2-aminoethyl)amino, cyanate, isocyanate, epoxy, hydroxyl, thiol, ureido and carboxyl groups and mixtures thereof.

12. The pearlescent pigment according to one of claims 1 to 11,
**characterised in that**
the organo-chemical after-coat comprises or consists of one or more α-silanes of the formula
-O₍₄₋ₙ₋ₘ₎-Si(-R¹)ₘ(-CH₂-Y)ₙ
and one or more γ-silanes of the formula
-O-₍₄₋ₙ₋ₘ₎Si(-R²)ₘ(-CH₂-CH₂-CH₂-Y)ₙ.

13. The pearlescent pigment according to claim 1,
**characterised in that**
the organo-chemical after-coat comprises no alkyl silane.

14. The pearlescent pigment according to one of the preceding claims,
**characterised in that**
the proportion of the organo-chemical after-coat is between 0.1 and 6 wt.%, preferably between 0.2 and 5 wt.%, based on the total weight of the pigment.

15. The pearlescent pigment according to one of the preceding claims,
**characterised in that**
the protective layer with cerium oxide and/or cerium oxide hydrate and/or cerium hydroxide can also contain SiO₂.

16. The pearlescent pigment according to one of the preceding claims,
**characterised in that**
further layers, preferably metal oxide layers, are arranged between the first protective layer with cerium oxide and/or cerium oxide hydrate and/or cerium hydroxide and the second protective layer consisting substantially, preferably entirely, of SiO₂.

17. The pearlescent pigment according to one of the preceding claims,
**characterised in that**
the platelet-like substrate has one or more metal oxide layers, preferably one or more layers of tin oxide, the platelet-like substrate coated with the one or more metal oxide layers preferably being calcined.

18. The pearlescent pigment according to one of claims 1 to 14,
**characterised in that**
a) the first protective layer consists of cerium oxide and/or cerium oxide hydrate and/or cerium hydroxide, and
b) the second protective layer consists of SiO₂.

19. The pearlescent pigment according to one of the preceding claims,
**characterised in that**
the SiO₂ content of the pigment is 0.5 to 8 wt.%, based on the total weight of the pigment.

20. The pearlescent pigment according to one of the preceding claims,
**characterised in that**
the cerium content is 0.05 to 3.0 wt.%, preferably 0.1 to 1.0 wt.%, based in each case on the total weight of the pigment.

21. The pearlescent pigment according to one of the preceding claims,
**characterised in that**
the platelet-like substrate is selected from the group consisting of
TiO₂-coated and/or iron oxide-coated mica platelets, TiO₂-coated and/or iron oxide-coated glass platelets, TiO₂-coated and/or iron oxide-coated alumina platelets, TiO₂-coated and/or iron oxide-coated SiO₂ platelets, bismuth oxychloride platelets,
pure TiO₂ platelets and
mixtures thereof.

22. The pearlescent pigment according to claim 21,
**characterised in that**
the platelet-like substrate is a glass platelet coated with TiO₂ and/or iron oxide, the mean thickness of the glass platelet being less than 500 nm, preferably less than 350 nm.

23. The pearlescent pigment according to one of the preceding claims,
**characterised in that**
the substrate comprises or is a layer of TiO₂.

24. A process for the production of a pearlescent pigment according to one of claims 1 to 23, comprising the following steps:
(a) suspending a metal oxide-containing, platelet-like substrate in a liquid phase, the metal oxide having a refractive index greater than 1.8,
(b) applying a layer with cerium oxide and/or cerium oxide hydrate and/or cerium hydroxide to the platelet-like substrate,
(c) optionally applying one or more metal oxide layers to the pigment coated in step (b),
(d) applying a layer consisting substantially, preferably entirely, of SiO₂ to the pigment coated in step (b) or step (c),
(e) coating the pigment according to step d) with an organo-chemical after-coat comprising at least one α-silane of the formula (III) X₍₄₋ₙ₋ₘ₎Si(R¹)ₘ(-CH₂-Y)ₙ (III) in which 1 ≤ n+m ≤ 3; m = 0 to 2; n = 1 to 3 and R¹ is a hydrogen atom or an Si-C-bonded C₁-C₂₀ hydrocarbon radical or a C₁-C₁₅ hydrocarbon oxy radical, in which in each case one or more methylene units not adjacent to one another may be replaced by groups -O-, -CO-, -COO-,-OCO-, or -OCOO-, -S- or -NR^{x}- and in which one or more methine units not adjacent to one another may be replaced by groups -N=, -N=N-, or P=, wherein R¹, independently of one another, can be the same or different,
R^{x} can be a hydrogen atom or a linear, branched and/or cyclic C₁-C₁₅ hydrocarbon or aryl radical and
X is a hydrolysable and condensable group selected from the group consisting of alkoxy, hydroxy, acetyloxy, halogen and mixtures thereof, and
Y is a functional binding group reactive with a binder system.

25. The process according to claim 24,
**characterised in that**
the liquid phase in step (a) contains a predominant amount of organic solvent which preferably contains less than 50 wt.% water.

26. The process according to one of claims 24 or 25,
**characterised in that**
in step (b) the layer with cerium oxide and/or cerium hydroxide is applied using cerium compounds that are soluble in an organic solvent, preferably cerium(III) acetate, cerium(III) octoate, cerium(III) acetylacetonate, cerium(III) nitrate, cerium(III) chloride or cerium(IV) ammonium nitrate or mixtures thereof, with the optional addition of water.

27. The process according to one of claims 24 to 26,
**characterised in that**
in step (e) the organo-chemical after-coat additionally comprises at least one γ-silane of the formula (IV)
X₍₄₋ₙ₋ₘ₎Si(-R²)ₘ(-CH₂-H₂-CH₂-Y)ₙ (IV),
in which X, R² and Y are as stated in claim 24 for the α-silane.

28. The process according to one of claims 24 to 27,
**characterised in that**
the group X is methoxy and/or ethoxy.

29. The process according to one of claims 24 to 28,
**characterised in that**
in step (d) the SiO₂ layer is applied, with the addition of tetraalkoxysilane, to the pigment coated in step (b) or (c), with the optional addition of water.

30. The process according to claim 29,
**characterised in that**
the tetraalkoxysilane is selected from the group consisting of tetramethoxysilane, tetraethoxysilane, tetraisopropoxysilane, tetrabutoxysilane and mixtures thereof.

31. The process according to one of claims 24 to 30,
**characterised in that**
in step (d) nitrogen-containing bases are additionally added.

32. The process according to one of claims 24 to 31,
**characterised in that**
in step (e) the SiO₂ layer is organo-chemically surface-modified in a liquid phase having a predominant content of organic solvent.

33. The process according to claim 24,
**characterised in that**
in step (d) the pigments coated in step (b) or step (c) are suspended in water or a predominantly aqueous medium, and the SiO₂ layer is applied using aqueous silicate solutions such as water glass.

34. The process according to claim 33,
**characterised in that**
the pigments coated with an SiO₂ layer are taken up in a liquid phase having a predominant content of organic solvent and are then organo-chemically surface-modified.

35. The process according to one of the preceding claims 24 to 32 or 34,
**characterised in that**
the organic solvent is ethyl acetate or alcohols, such as methanol, ethanol, n-propanol, isopropanol, n-butanol, 2-methylpropanol, 2-methoxypropanol, butyl glycol or mixtures thereof.

36. The process according to one of the preceding claims 24 to 35,
**characterised in that**
the at least one α-silane of the formula X₍₄₋ₙ₋ₘ₎Si(-R)ₘ(CH₂-Y)ₙ is a monomer.

37. The process according to one of the preceding claims 24 to 36,
**characterised in that**
the at least one α-silane of the formula X₍₄₋ₙ₋ₘ₎Si(-R)ₘ₍CH₂-Y)ₙ is a silane that is prehydrolysed to an extent of no more than 50%, preferably a non-prehydrolysed silane.

38. The process according to one of the preceding claims 27 to 35,
**characterised in that**
the at least one γ-silane of the formula X₍₄₋ₙ₋ₘ₎Si(-R²)ₘ(-CH₂-CH₂-CH₂-Y)ₙ
is a silane that is prehydrolysed to an extent of no more than 50%, preferably a non-prehydrolysed silane.

39. Use of a pearlescent pigment according to one of claims 1 to 23 in coatings, paints, powder coatings, printing inks, plastics and cosmetic preparations.

40. Use of a pearlescent pigment according to one of claims 1 to 23 in weather-resistant automotive paints as well as powder coatings and coatings for weather-resistant exterior and masonry applications.

## Revendications

1. Pigment nacré avec un substrat en forme de plaquettes, contenant un oxyde métallique, et avec une première et une deuxième couche de protection, l'oxyde métallique ayant un indice de réfraction supérieur à 1,8,
**caractérisé en ce que**
a) la première couche de protection comprend de l'oxyde de cérium et/ou de l'hydrate d'oxyde de cérium et/ou de l'hydroxyde de cérium,
b) la deuxième couche de protection consiste essentiellement, de préférence complètement, en SiO₂,
la deuxième couche de protection étant disposée après la première couche de protection et des couches d'oxyde métallique qui sont différentes de l'oxyde de cérium et/ou de l'hydrate d'oxyde de cérium et/ou de l'hydroxyde de cérium et du SiO₂ pouvant être disposées entre la première et la deuxième couche de protection, sachant que
c) la deuxième couche de protection présente un revêtement ultérieur organochimique et que le revêtement organochimique comprend au moins un α-silane de la formule (I)
-O₍₄₋ₙ₋ₘ₎-Si(-R¹)ₘ(-CH₂-Y)ₙ (I)
lié par au moins un atome d'oxygène à la deuxième couche de protection, sachant que l'on a 1 ≤ n+m ≤ 3 ; m = 0 - 2 ; n = 1 - 3 et que
R¹ est un atome d'hydrogène ou un radical hydrocarbure en C₁ à C₂₀ lié comme Si-C ou un radical oxyhydrocarbure en C₁ à C₁₅, dans lequel respectivement une ou plusieurs unités méthylènes non contiguës l'une de l'autre peuvent être remplacées par des groupes -O-, -CO-, -COO-, -OCO-, ou -OCOO-, -S-, ou -NR^{x-}, et dans lequel respectivement une ou plusieurs unités méthines non contiguës l'une de l'autre peuvent être remplacées par des groupes -N=, -N=N-, ou -P=, les R¹ pouvant être indépendamment les uns des autres identiques ou différents,
R^{x} pouvant être un atome d'hydrogène ou un radical hydrocarbure linéaire, ramifié et/ou cyclique ou un radical aryle en C₁ à C₁₅, et
Y est un groupe fonctionnel de liaison réactif avec un système de liant, sachant que le revêtement ultérieur organochimique ne comporte pas de silane sans groupes fonctionnels de liaison.

2. Pigment nacré selon la revendication 1,
**caractérisé en ce que**
le radical hydrocarbure en C₁ à C₂₀ lié comme Si-C R¹ est substitué par au moins un groupe fonctionnel de liaison réactif avec un système de liant, le groupe fonctionnel de liaison réactif étant choisi parmi le groupe constitué de -CN, -NCO, -NR^{x}₂, -COOH, -COOR^{x}, -acryle, -méthacryle, -époxy, époxycyclohexyle, uréido, -SH, -OH, -CONR^{x}₂ et des mélanges de ces derniers.

3. Pigment nacré selon l'une quelconque des revendications précédentes,
**caractérisé en ce que**
le groupe de liaison fonctionnel Y réactif avec un système de liant est choisi parmi le groupe constitué de -CN, -NCO, -NR^{x}₂, -CHNR^{x}₂ - CH₂-NR^{x} morpholino, -COOH, -COOR^{x}, -OC(O)C(R)=CH₂, époxy, de préférence glycidoxy, époxycyclohexyl, uréido, -C(O)-NH-C(O)-NR^{x}₂, -SH, -OH ou des mélanges de ceux-ci.

4. Pigment nacré selon la revendication 2 ou 3,
**caractérisé en ce que**
R^{x} est choisi parmi le groupe constitué d'un atome d'hydrogène, d'un radical hydrocarbure linéaire, ramifié et/ou cyclique ou aryle en C₁ à C₁₅, sachant que les R^{x} peuvent être indépendamment les uns des autres identiques ou différents.

5. Pigment nacré selon l'une quelconque des revendications précédentes,
**caractérisé en ce que**
n = 1 et m = 1.

6. Pigment nacré selon l'une quelconque des revendications précédentes,
**caractérisé en ce que**
le radical R¹ est un radical hydrocarbure en C₁ à C₃ non substitué, de préférence un groupe méthyle.

7. Pigment nacré selon l'une quelconque des revendications 1 à 4,
**caractérisé en ce que**
n = 1 et m = 0.

8. Pigment nacré selon l'une quelconque des revendications 1 à 6,
**caractérisé en ce que**
le revêtement ultérieur organochimique comporte un ou plusieurs α-silanes de la formule
-O₍₄₋ₙ₋ₘ₎-SiR¹ₘ(-CH₂-Y)ₙ
ou consiste en ceux-ci.

9. Pigment nacré selon l'une quelconque des revendications précédentes, **caractérisé en ce que**
le revêtement ultérieur organochimique comprend en plus au moins un γ-silane de la formule (II)
-O₍₄₋ₙ₋ₘ₎Si(-R²)ₘ (-CH₂ - CH₂ - CH₂-Y)ₙ (II)
dans laquelle on a 1 ≤ n+m ≤ 3 ; m = 0 - 2 ; n = 1 - 3 et
R² est un atome d'hydrogène ou un radical hydrocarbure en C₁ à C₂₀ lié comme Si-C ou un radical oxyhydrocarbure en C₁ à C₁₅, dans lequel respectivement une ou plusieurs unités méthylènes non contiguës l'une de l'autre peuvent être remplacées par des groupes -O-, -CO-, -COO-, -OCO-, ou -OCOO-, -S-, ou -NR^{x}-, et dans lequel une ou plusieurs unités méthines non contiguës l'une de l'autre peuvent être remplacées par des groupes -N=, -N=N-, ou -P=, les R² pouvant être indépendamment les uns des autres identiques ou différents,
R^{x} peut être un atome d'hydrogène ou un radical hydrocarbure linéaire, ramifié et/ou cyclique ou un radical aryle en C₁ à C₁₅, les R^{x} pouvant être identiques ou différents, et
Y est un groupe fonctionnel de liaison réactif avec un système de liant.

10. Pigment nacré selon la revendication 9,
**caractérisé en ce que**
le radical hydrocarbure en C₁ à C₂₀ lié comme Si-C R² est substitué par au moins un groupe fonctionnel de liaison réactif avec un système de liant, le groupe fonctionnel de liaison réactif étant choisi parmi le groupe qui consiste en le -CN, le -NCO, le -NR^{x}₂, le -COOH, le -COOR^{x}, le -acryl, le -méthacryl, le -époxy, le -SH, le -OH, l'uréido, le -CONR^{x}₂ et des mélanges de ceux-ci.

11. Pigment nacré selon la revendication 9 ou 10,
**caractérisé en ce que**
le groupe fonctionnel de liaison réactif avec un système de liant Y est choisi parmi le groupe qui consiste en les groupes acrylate, méthacrylate, vinyle, amino, γ-(2-aminoéthyl)amino, cyanate-, isocyanate-, époxy-, hydroxy-, thiol-, uréido-, carboxyle et des mélanges de ceux-ci.

12. Pigment nacré selon l'une quelconque des revendications 1 à 11, **caractérisé en ce que**
le revêtement ultérieur organochimique comporte un ou plusieurs α-silanes de la formule
-O₍₄₋ₙ₋ₘ₎-Si(-R¹)ₘ(-CH₂-Y)ₙ
et un ou plusieurs γ-silanes de la formule
-O₍₄₋ₙ₋ₘ₎Si(-R²)ₘ (-CH₂ - CH₂ - CH₂ -Y)ₙ
ou consiste en ces derniers.

13. Pigment nacré selon la revendication 1,
**caractérisé en ce que**
le revêtement ultérieur organochimique ne comporte pas d'alkylsilanes.

14. Pigment nacré selon l'une quelconque des revendications précédentes,
**caractérisé en ce que**
la proportion de revêtement ultérieur organochimique est comprise entre 0,1 et 6 % en poids, de préférence entre 0,2 et 5 % en poids, rapportés au poids total du pigment.

15. Pigment nacré selon l'une quelconque des revendications précédentes,
**caractérisé en ce que**
la couche de protection avec l'oxyde de cérium et/ou l'hydrate d'oxyde de cérium et/ou l'hydroxyde de cérium peut contenir en plus du SiO₂.

16. Pigment nacré selon l'une quelconque des revendications précédentes,
**caractérisé en ce que**
entre la première couche de protection avec l'oxyde de cérium et/ou l'hydrate d'oxyde de cérium et/ou l'hydroxyde de cérium et la deuxième consistant essentiellement, de préférence complètement, en SiO₂, d'autres couches sont disposées, de préférence des couches d'oxydes métalliques.

17. Pigment nacré selon l'une quelconque des revendications précédentes,
**caractérisé en ce que**
le substrat en forme de plaquettes comporte une ou plusieurs couches d'oxydes métalliques, de préférence une ou plusieurs couches d'oxyde d'étain, le substrat en forme de plaquettes revêtu de l'une ou desdites plusieurs couches d'oxydes métalliques étant de préférence calciné.

18. Pigment nacré selon l'une quelconque des revendications 1 à 14, **caractérisé en ce que**
a) la première couche de protection consiste en de l'oxyde de cérium et/ou en de l'hydrate d'oxyde de cérium et/ou en de l'hydroxyde de cérium et
b) la deuxième couche de protection en SiO₂.

19. Pigment nacré selon l'une quelconque des revendications précédentes,
**caractérisé en ce que**
la teneur en SiO₂ du pigment est de 0,5 à 8 % en poids, rapportée au poids total du pigment.

20. Pigment nacré selon l'une quelconque des revendications précédentes,
**caractérisé en ce que**
la proportion de cérium est de 0,05 à 3,0 % en poids, de préférence de 0,1 à 1 % en poids, rapportés chaque fois au poids total du pigment.

21. Pigment nacré selon l'une quelconque des revendications précédentes,
**caractérisé en ce que**
le substrat en forme de plaquettes est choisi parmi le groupe qui consiste en des plaquettes de mica revêtues de TiO₂ et/ou d'oxyde de fer des plaquettes de verre revêtues de TiO₂ et/ou d'oxyde de fer des plaquettes d'oxyde d'aluminium revêtues de TiO₂ et/ou d'oxyde de fer des plaquettes de SiO₂ revêtues de TiO₂ et/ou d'oxyde de fer des plaquettes d'oxychlorure de bismuth,
des plaquettes de TiO₂ pur et
en des mélanges de ceux-ci.

22. Pigment nacré selon la revendication 21,
**caractérisé en ce que**
le substrat en forme de plaquettes est une plaquette de verre revêtue de TiO₂ et/ou d'oxyde de fer, l'épaisseur moyenne de la plaquette de verre étant de moins de 500 nm, de préférence de moins de 350 nm.

23. Pigment nacré selon l'une quelconque des revendications précédentes,
**caractérisé en ce que**
le substrat comporte ou est une couche de TiO₂.

24. Procédé de préparation d'un pigment nacré selon l'une quelconque des revendications 1 à 23, comprenant les étapes suivantes :
(a) mise en suspension d'un substrat en forme de plaquettes contenant des oxydes métalliques dans une phase liquide, l'oxyde métallique ayant un indice de réfraction de plus de 1,8,
(b) application sur le substrat en forme de plaquettes d'une couche avec de l'oxyde de cérium et/ou de l'hydrate d'oxyde de cérium et/ou de l'hydroxyde de cérium,
(c) en option, application d'une ou de plusieurs couches d'oxydes métalliques sur le pigment revêtu à l'étape (b),
(d) application sur le pigment revêtu à l'étape (b) ou à l'étape (c) d'une couche consistant essentiellement, de préférence complètement, en SiO₂,
(e) revêtement du pigment après l'étape (d) par un revêtement ultérieur organochimique comprenant au moins un α-silane de la formule (III)
X₍₄₋ₙ₋ₘ₎Si(R¹)ₘ (-CH₂-Y)ₙ, (III)
dans laquelle on a 1 ≤ n+m ≤ 3 ; m = 0 - 2 ; n = 1 - 3 et R¹ est un atome d'hydrogène ou un radical hydrocarbure en C₁ à C₂₀ lié selon Si-C ou un radical oxyhydrocarbure en C₁ à C₁₅, dans lequel respectivement une ou plusieurs unités méthylènes non contiguës l'une de l'autre peuvent être remplacées par des groupes -O-, -CO-, -COO-, -OCO-, ou -OCOO-, -S-, ou -NR^{x}-, et dans lequel une ou plusieurs unités méthines non contiguës l'une de l'autre peuvent être remplacées par des groupes -N=, -N=N-, ou P=, les R¹ pouvant être indépendamment les uns des autres identiques ou différents,
R^{x} pouvant être un atome d'hydrogène ou un radical hydrocarbure linéaire, ramifié et/ou cyclique ou un radical aryle en C₁ à C₁₅, et
X est un groupe hydrolysable et condensable qui est choisi parmi le groupe qui consiste en un alcoxyle, un hydroxyle, un acétyloxyle, un halogène et des mélanges de ceux-ci, et
Y est un groupe fonctionnel de liaison réactif avec un système de liant.

25. Procédé selon la revendication 24,
**caractérisé en ce que**
dans l'étape (a), la phase liquide contient une proportion majoritaire d'un solvant organique qui contient de préférence moins de 50 % en poids d'eau.

26. Procédé selon la l'une quelconque des revendications 24 ou 25,
**caractérisé en ce que**
dans l'étape (b), la couche avec l'oxyde de cérium et/ou l'hydroxyde de cérium est appliquée moyennant l'utilisation de composés de cérium solubles dans des solvants organiques, de préférence de l'acétate de cérium (III), de l'octoate de cérium (III), de l'acétylacétonate de cérium (III), du nitrate de cérium (III), du chlorure de cérium (III) ou du nitrate de cérium (VI) et d'ammonium, ou de mélanges de ceux-ci, moyennant l'addition optionnelle d'eau.

27. Procédé selon l'une quelconque des revendications 24 à 26,
**caractérisé en ce que**
dans l'étape (e), le revêtement organochimique ultérieur comprend en plus au moins un γ-silane de la formule (IV)
X₍₄₋ₙ₋ₘ₎Si(-R²)ₘ (-CH₂ - CH₂ - CH₂ -Y)ₙ (IV)
dans laquelle X, R², et Y sont comme il est spécifié dans la revendication 24 pour le α-silane.

28. Procédé selon l'une quelconque des revendications 24 à 27,
**caractérisé en ce que**
le groupe X est un méthoxyle ou un éthoxyle.

29. Procédé selon l'une quelconque des revendications 24 à 28,
**caractérisé en ce que**
dans l'étape (d), la couche de SiO₂ est appliquée moyennant l'addition d'un tétraalcoxysilane au pigment revêtu dans l'étape (b) ou (c) moyennant l'addition optionnelle d'eau.

30. Procédé selon la revendication 29,
**caractérisé en ce que**
le tétraalcoxysilane est choisi parmi le groupe qui consiste en le tétraméthoxysilane, le tétraéthoxysilane, le tétra-isopropoxysilane, le tétrabutoxysilane et des mélange de ceux-ci.

31. Procédé selon l'une quelconque des revendications 24 à 30,
**caractérisé en ce que**
dans l'étape (d), des bases azotées sont ajoutées en plus.

32. Procédé selon l'une quelconque des revendications 24 à 31,
**caractérisé en ce que**
dans l'étape (e), la couche de SiO₂ est modifiée superficiellement organochimiquement dans une phase liquide avec une proportion majoritaire de solvant organique.

33. Procédé selon la revendication 24,
**caractérisé en ce que**
dans l'étape (d), les pigments revêtus dans l'étape (b) ou dans l'étape (c) sont mis en suspension dans de l'eau ou dans un milieu essentiellement aqueux et **en ce que** la couche de SiO₂ est appliquée moyennant l'utilisation de solutions aqueuses de silicates comme du verre soluble.

34. Procédé selon la revendication 33,
**caractérisé en ce que**
les pigments revêtus d'une couche de SiO₂ sont recueillis dans une phase liquide avec une proportion prépondérante de solvant organique et sont ensuite modifiés organochimiquement en surface.

35. Procédé selon l'une quelconque des revendications précédentes 24 à 32 ou 34,
**caractérisé en ce que**
le solvant organique est un ester acétique, des alcools comme le méthanol, l'éthanol, le n-propanol, l'isopropanol, le n-butanol, le 2-méthylpropanol, le 2-méthoxypropanol, le butylglycol ou des mélange de ceux-ci.

36. Procédé selon l'une quelconque des revendications 24 à 35,
**caractérisé en ce que**
ledit au moins un α-silane de la formule
x₍₄₋ₙ₋ₘ₎Si(-R)ₘ(CH₂-Y)ₙ est un monomère.

37. Procédé selon l'une quelconque des revendications 24 à 36,
**caractérisé en ce que**
ledit au moins un α-silane de la formule
X₍₄₋ₙ₋ₘ₎Si(-R)ₘ(CH₂-Y)ₙ est un silane pré-hydrolysé dans la mesure de pas plus que 50 %, de préférence un silane non pré-hydrolysé.

38. Procédé selon l'une quelconque des revendications 27 à 35,
**caractérisé en ce que**
ledit au moins un γ-silane de la formule
X₍₄₋ₙ₋ₘ₎Si(-R²)ₘ (-CH₂ - CH₂ - CH₂ -Y)ₙ
est un silane pré-hydrolysé dans la mesure de pas plus que 50 %, de préférence un silane non pré-hydrolysé.

39. Utilisation d'un pigment nacré selon l'une quelconque des revendications 1 à 23 dans des enduits, des laques, des laques fusibles, des encres d'imprimerie, des plastiques et des préparations cosmétiques.

40. Utilisation d'un pigment nacré selon l'une quelconque des revendications 1 à 23 dans des peintures d'automobile qui résistent aux intempéries, ainsi dans des laques fusibles et dans des enduits pour des applications stables aux intempéries en extérieur et en façades.
